# EUROPEAN PATENT SPECIFICATION

(11) **EP 2 450 807 B1**
(45) Date of publication and mention of the grant of the patent: **10.12.2014**
(21) Application number: 11008562.8
(22) Date of filing: 25.10.2011
(51) Int. Cl.: G06F 17/30

(54) **Information processing apparatus having history control function and control method therefor**
Informationsverarbeitungsvorrichtung mit Verlaufssteuerfunktion und Steuerverfahren dafür
Appareil de traitement d'informations ayant une fonction de contrôle d'historique et procédé de contrôle associé

(30) Priority: 05.11.2010 JP 2010248640
(43) Date of publication of application: 09.05.2012
(73) Proprietor: Canon Kabushiki Kaisha, Tokyo (JP)
(72) Inventor: Fujisawa, Minoru, Tokyo (JP)
(74) Representative: WESER & Kollegen

(56) References cited:
- US-A- 5 933 630
- US-A1- 2010 082 555
- US-A1- 2010 115 443
- US-B1- 7 779 021
- PAUL J LEACH ET AL: 'A Common Internet File System (CIFS/1.0) Protocol', [Online] 19 December 1997, pages 1 - 121, XP055071758 Retrieved from the Internet: <URL:http://tools.ietf.org/html/draft-leach -cifs-v1-spec-01> [retrieved on 2013-07-17]

## Description

### BACKGROUND OF THE INVENTION

### Field of the Invention

The invention relates to an information processing apparatus that is connected to a network and that has a history control function for controlling an access to a file (image data etc.) that is exchanged with another apparatus on the network, and also relates to a control method for the information processing apparatus.

### Description of the Related Art

There is a known technique by which files (image data, document data, etc.) are stored in a storage area of an information processing apparatus such as an image forming apparatus that is connected to a network system and the files are read, printed, and deleted by another apparatus connected to the network. The image forming apparatus in such a network system is different from a general file server because of serving as a file management server and a file operation client.

A user can operate the image forming apparatus using its user interface screen to perform a scanning process, to transfer the scanned image data to a storage area of another apparatus on the network, and to save the scanned image data into a storage area of the image forming apparatus itself. The image forming apparatus can read image data from a storage area of another apparatus on the network or the storage area of the image forming apparatus itself, and can print it. That is, the image forming apparatus has an original function using an image forming process in addition to functions of a general file server and a general file operation client.

Furthermore, the image forming apparatus that is connected to the network controls a user's operation history and an access history from another apparatus on the network as a function to retain security. Since the control of the operation history and the access history about the file operations between the apparatuses including the image forming apparatus itself on the network is important, a conventional file access apparatus also controls them.

The method of saving network packets that correspond to file operation requests from a remote apparatus on a network is known as a control method for the access history and the operation history about the file exchanged between the apparatuses on the network. There is also a method of saving and controlling a file operation command, operation user information, an operation date and time, etc. that are included in a network packet.

However, an image forming apparatus has an insufficient storage area for storing a file, an operation history, and an access history in contrast to a file server or a PC, in general. Therefore, when the conventional control method is applied to an image forming apparatus on a network, the data volume of the history to be controlled is restricted.

In order to cope with such a problem, when the data volume of an operation history or an access history becomes huge, there is a known technique that summarizes a series of similar requests (commands) into one history, or thins out a part of the requests to store. Japanese Laid-Open Patent Publication (Kokai) No. H06-187213 (JP H06-187213A) discloses a method to control only histories of types that have been designated by a user.

However, the above-mentioned conventional method has a problem that an important history from a point of view of security cannot be saved and controlled, when a user has not designated the type of the history or a user has mistaken in designating operation.

On the other hand, a CIFS (Common Internet File System) is frequently used on a network as a file operation protocol. In the CIFS, low-level file I/O commands (a file open command, a file close command, a Truncate request, etc.) are issued in order to perform detailed file operation. In this way, when a file is accessed using the low-level file I/O, since one file operation requires a plurality of types of commands by a complicated sequence, the data volume of the operation history becomes too large to save by the restricted history storage area. Since the CIFS processes a plurality of types of commands by the complicated sequence, an effect of the thinning out becomes little.

When all the operation histories of the CIFS are saved, the analysis of the operation histories takes great time even if a user who is familiar with the CIFS protocol analyzes. Therefore, it is difficult to control the history for verification when a problem occurs with respect to security.

Hereafter, examples of conventional processes about file operations in a network system in which a client and a server are connected will be described.

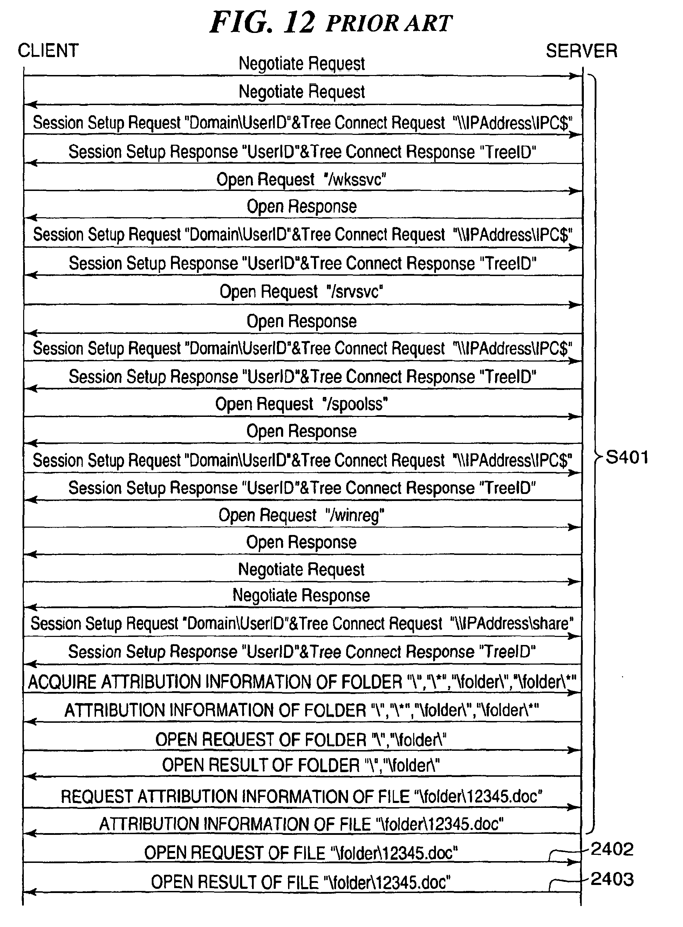

FIG. 12 is a view showing an example of a command sequence between the client and the server to open a file by using the CIFS protocol that is generally used for a file access via a network.

First, in step S401, a negotiation is performed between the client and the server in order to communicate using the CIFS protocol. Establishment of a communication session (Session Setup), a tree connection (Tree Connect), etc. are performed. In the negotiation process in the CIFS, information about a version of a communication command, etc. has been checked between the client and the server, and then, they communicate based on the information. In the establishment of session and the tree connection, the client and the server exchange a domain and host information, a user ID (UID) and a password for specifying a user of the client, and an access target shared directory.

The client transmits the user ID to the server and transmits enciphered password information to the server if needed. The server determines whether the CIFS session can be established by inspecting the user ID and the password received. When the CIFS session can be established, the server allocates the user ID to the client and allocates a tree ID (TID) to the path of the access target shared directory required by the client. When the server transmits the information including the user ID, the tree ID, etc., to the client, the CIFS session and the tree connection are established. Then, the client requires attribution information about the access target shared directory, list information and attribution information about file/directory in the directory from the server, and the server transmits these pieces of information as a response.

Next, the client requests the server to open an access target file in the server using the information exchanged with the server in step S402. Then, in step S403, the server analyzes the open request from the client, and opens the access target file if possible. When an open result is normal, the server allocates a file ID (FID) to a pointer of the opened file, and transmits the file ID together with the result of the open operation to the client. Then, the server controls the file ID. After that, when receiving a file operation request to the file ID from the client, the server processes the actual file using the file pointer corresponding to the file ID.

The negotiation, the session setup, the tree connection, and the acquisition of the attribution and the list, which are performed in the step S401, are necessary for the client to communicate with the server by the CIFS protocol or to acquire the path information of a file to be opened. However, the process in the step S401 is not an open request of the access target file. Therefore, when all the commands of the sequence in FIG. 12 are acquired and controlled as the history, and when the server has many files and directories, the data volume of the sequence between the client and the server becomes huge, and the history to be saved becomes huge too. Therefore, it is not appropriate to record all the commands in FIG. 12 as a history for the network system that has a limited history storage area like an embedded system of an image forming apparatus.

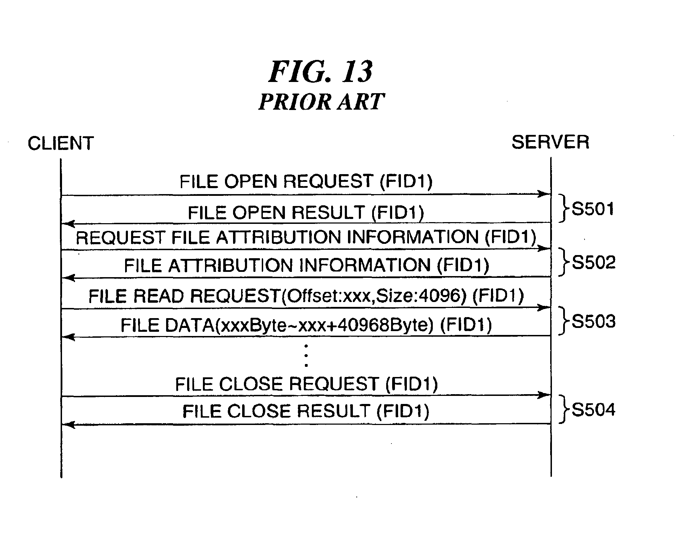

FIG. 13 is a view showing an example of a command sequence between the client and the server to read a file by using the CIFS protocol that is generally used for a file access via a network. In FIG. 13, the process shown in the step S401 is performed in order to perform a negotiation between the client and the server in the same manner in FIG. 12. Then, the process proceeds to step S501.

The client requests the server to open the file of the operation target in the step S501. The server receives and analyzes the request and opens the actual file. When the file could be opened normally, the server allocates a file ID to the file pointer of the file, and transmits an open result and the file ID to the client.

The client requests the file attribute of the file concerned from the server in next step S502. Here, the file attribute refers to various kinds of information such as date and time information (the date and time of creation, the date and time of update, and the date and time of last access), compressed data, a hidden attribute, read-only setting, and a temporary file. Thus, the server analyzes the received request and acquires the attribution information which is managed for each file of every to the applicable file, and transmits to a client.

Next, the client requests the server to read a file using the received file ID in step S503. In that case, the client designates an offset value from the beginning of the file corresponding to the file ID and a data size to be read from the position shown by the offset value in the file. The server receives and analyzes the request from the client, reads the data of the designated size from the position shown by the offset value designated by the client in the file corresponding to the file ID, and transmits the read data to the client. The client and the server repeat the process in the step S503 while changing the offset value and the size. Finally, all the data of the file corresponding to the file ID is read by the client.

The client requests the server to close the file by using the file ID in step S504. The server receives and analyzes the request from the client, closes the file corresponding to the file ID, and transmits the result to the client.

In the command sequence in FIG. 13, the command sequence between the client and the servers increases as the total data size of the file corresponding to the file ID becomes larger. Therefore, when all the commands of this command sequence are acquired and controlled as the history, the size of the history becomes huge. Therefore, it is not appropriate to record all the command sequences in FIG. 13 as a history for the network system that has a limited history storage area like an embedded system of an image forming apparatus.

In the command sequence in FIG. 13, when the history of reading and writing of a file is outputted to a user interface etc., the method of outputting a plurality of read requests by the client as one reading process among the steps S501 through S504 is generally used. However, when a file is operated by the PC etc. by using the CIFS protocol, an application of the client may request to read a file for the other purpose of a read request by a user of the client (for example, an inspection or an acquisition of a file, acquisition). Specifically, reading of the data part at a specific offset in a file, a check of existence of a file, etc. are listed. Therefore, the above-mentioned output method outputs the history of reading even if a user does not perform a file operation to the reading process.

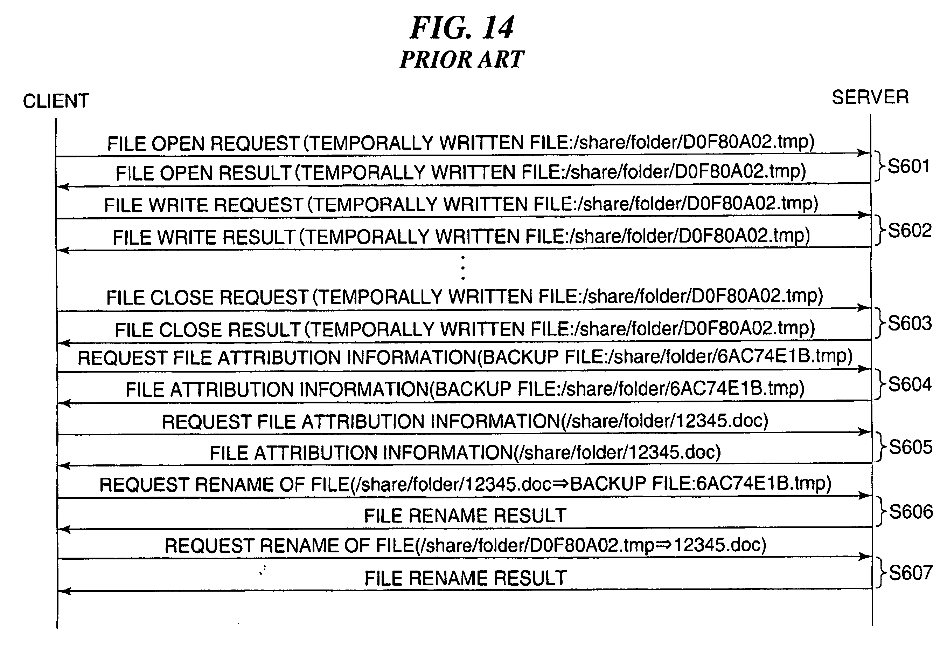

FIG. 14 is a view showing an example of a command sequence between the client and the server to save a file under editing by using the CIFS protocol that is generally used for a file access via a network. This example supposes that a user edits and saves a file (/share/Folder/12345.doc). In this case, although the user seems to edit the file, the file actually edited is a temporary file. In FIG. 14, the process shown in the step S401 is performed in order to perform a negotiation between the client and the server in the same manner in FIG. 12. Then, the process proceeds to step S601.

In the step S601, the client requests the server to open a temporary write file (/share/Folder/D0F80A02.tmp). The server receives and analyzes the request and opens the actual file. When the file could be opened normally, the server allocates a file ID to the file pointer of the opened file, and transmits an open result and the file ID to the client.

The client requests the server to write the file by using the file ID in next step S504. In that case, the client designates an offset value from the beginning of the file corresponding to the file ID and a data size to be written from the point shown by the offset value in the file. The server receives and analyzes the request from the client, writes the data of the designated size from the position shown by the offset value designated by the client in the file corresponding to the file ID, and transmits the write result to the client. The client and the server repeat the process in the step S602 while changing the offset value and the data size. Finally, all the data is written to the file corresponding to the file ID.

Next, the client requests the server to close the file by using the file ID in step S603. The server receives and analyzes the request from the client, closes the file corresponding to the file ID designate, and transmits the result to the client. In next step S604, the client requests a file attribute of a temporary file (a backup file: /share/Folder/6AC74E1B.tmp), which is different from the file opened in the step S601, from the server. The server analyzes the received request and acquires the attribution information, which is controlled for each file, corresponding to the file concerned, and transmits the information to the client.

In the step S605, the client requests the file attribute of the file under editing (/share/Folder/D0F80A02.tmp) from the server. The server analyzes the received request and acquires the attribution information, which is controlled for each file, corresponding to the file concerned, and transmits the information to the client.

Then, in step S606, the client requests to rename the file under editing (/share/Folder/12345.doc) to the filename of the backup file of which the file attribute has been requested in the step S604. The server receives and analyzes the request from the client, renames the file under editing, and transmits the result to the client. Then, in step S607, the client requests to rename the temporary write file (/share/Folder/D0F80A02.tmp) to the filename of the file under editing (/share/Folder/12345.doc). The server returns the rename result to the client.

In the command sequence in FIG. 14, the server receives and analyzes the request from the client, renames the temporary write file (/share/Folder/D0F80A02.tmp), and transmits the result to the client. On the other hand, the client enables the backup of the pre-edit file and the saving of the post-edit file into the server by using two temporary files. Generally, a writing process to a temporary file is executed by a document application used by a user, and cannot be recognized by the user.

Therefore, the amount of the sequence between the client and the server increases with the total data size of a temporary file, when the server acquires and controls all the above-mentioned process as a history. Accordingly, the size of the history to be saved becomes huge as well as the command sequence in FIG. 12. This causes a big problem for the network system that only a limited history storage area like the embedded system of an image forming apparatus can secure.

When the history of writing a file is outputted to a user interface etc., the method of outputting a plurality of write requests by the client as one writing process among the steps S601 through S603 is generally used. However, when a file is operated by a PC etc. by using the CIFS protocol, an application of the client may request to write for the other purpose of a write request by a user of the client (for example, editing or saving a file), in general. Specifically, a partial writing to data that exists at a specific offset in a file is listed.

In the step S602, the data is not written to the file (/share/Folder/12345.doc) that the user wants to edit, but is written to the temporary file (/share/Folder/D0F80A02.tmp) in practice. Therefore, even if the client outputs this history to the user interface, the user cannot recognize about this history, which loses the inherent purpose of the history control of recognizing the file operation history by the user. Such a situation shows that the command sequence in FIG. 14 is inappropriate to be applied to a network system like the embedded system of an image forming apparatus.

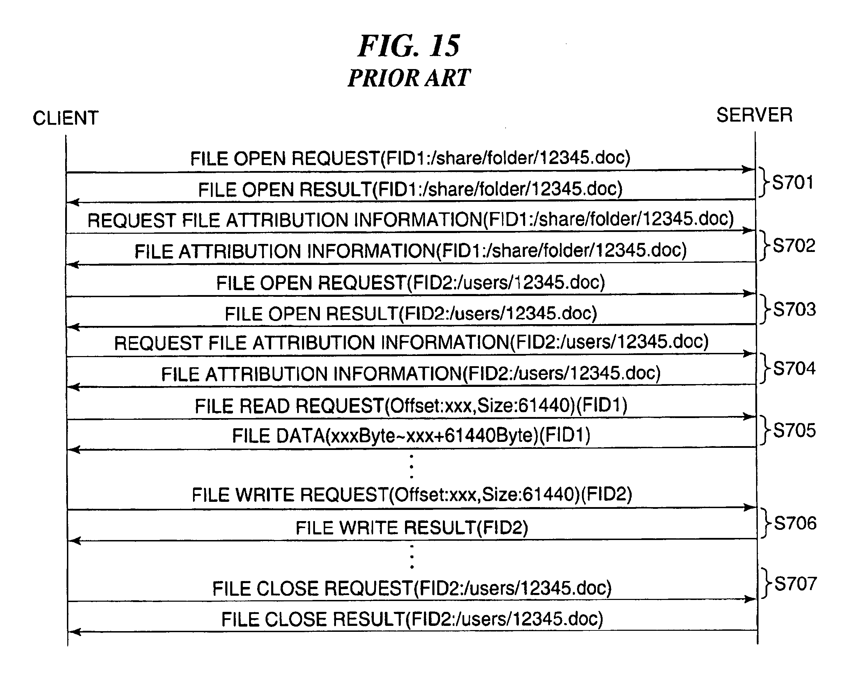

FIG. 15 is a view showing an example of a command sequence between the client and the server when the client copies a file in the server to another path in the same server by using the CIFS protocol that is generally used for a file access via a network. In FIG. 15, the process shown in the step S401 is performed in order to perform a negotiation between the client and the server in the same manner in FIG. 12. Then, the process proceeds to step S701.

The client requests the server to open a source file to be copied in step S701. The server receives and analyzes the request and opens the actual file. When the file could be opened normally, the server allocates a file ID to the file pointer of the opened file, and transmits an open result and the file ID to the client. The client requests a file attribute of the source file from the server in next step S702. The server analyzes the received request and acquires the attribution information, which is controlled for each file, corresponding to the file concerned, and transmits the information to the client.

Next, the client requests the server to open a file path as a copy destination in step S703. The server receives and analyzes the request and opens the actual file. When the file to open does not exist, the server newly creates a file and opens the created file. When the newly created file was opened or when the existed file could be opened normally, the server allocates a file ID to the file pointer of the opened file, and transmits an open result and the file ID to the client.

Next, the client requests a file attribute of the file of the copy destination from the server in step S704. The server analyzes the received request and acquires the attribution information, which is controlled for each file, corresponding to the file concerned, and transmits the information to the client. Then, in step S705, the client requests the server to read file data by using the file ID acquired in the step S701. In that case, the client designates an offset value from the beginning of the file corresponding to the file ID and a data size to be acquired from the point shown by the offset value in the file. The server receives and analyzes the request from the client, reads the data of the designated size from the position shown by the offset value designated in the file corresponding to the file ID, and transmits the read data to the client. The client and the server repeat the process in the step S705 while changing the offset value and the data size. Finally, all the data of the source file corresponding to the file ID is read.

Next, in step S706, the client requests the server to write the data to the file by using the file ID acquired in the step S701. In that case, the client designates an offset value from the beginning of the file corresponding to the file ID and a data size to be written from the point shown by the offset value in the file. The server receives and analyzes the request from the client, writes the data of the designated size from the position shown by the offset value designated by the client in the file corresponding to the file ID, and transmits the write result to the client. The client and the server repeat the process in the step S706 while changing the offset value and the data size. Finally, all the data is written to the copy destination file corresponding to the file ID.

In step S707, the client requests the server to close the file using the file ID acquired in the step S703. The server receives and analyzes the request from the client, closes the file corresponding to the file ID, and transmits the result to the client.

In the command sequence in FIG. 15, the client once reads the file data of the copy source and then writes the read data to the copy destination path on the server in order to copy the file exists on the server to the other path on the same server. Although the CIFS protocol includes a copy request, a user can copy a file by using the command sequence in FIG. 15 without using the copy request.

However, when an image forming apparatus acquires and controls all the history of the above-mentioned process by the command sequence in FIG. 15, the following problems arise. That is, since the client once reads the copy source file to the client itself and then writes the data to the copy destination in the server, a read and a write are recorded in the history instead of a copy. Generally, a user who uses a PC is confused in controlling the history when the history is outputted as the read and write even if the user copied the file as the user's file operation.

When the history is controlled by the method by the command sequence in FIG. 15, it is difficult to investigate a file operation log based on the history when some security problem occurs at a later date. Such a situation shows that the command sequence in FIG. 15 is inappropriate to be applied to a network system like the embedded system of an image forming apparatus.

US 2010/0082555 A1 discloses a management device connected to a file server providing a computer with file data stored in a storage subsystem, and collecting information about access to the file data. In said management device, a log of access to the file data stored in the storage subsystem is collected as access data, and the access data for the same file data is grouped.

US 2010/0115443 A1 discloses systems, methods, computer program code, and means for the rules-based presentation of log messages on a graphical timeline. Here, a request to view log file information is received, and a plurality of log file messages are retrieved based on the request. These plurality of log file messages are aggregated based on timestamp information contained in each of the log file messages and the aggregated log file messages are displayed along a graphical timeline.

US 7,779,021 B1 a log file processing system which sorts records from large log files and groups them by session without making a complete copy of the log files by capturing a subset of the log files in a sliding memory window and identifying all records in the window that form a complete user session. Records belonging to a complete session are output for analyzing, and the remaining records are output as raw log data for additional processing.

And US 5,933,630 A discloses a method where launch time for a computer program is reduced by logging hard disk accesses during an initial launch, then processing the log file to accelerate subsequent launches. The log file is processed by identifying all the file portions accessed during the launch, eliminating any duplicate cluster accesses, then sorting the remaining accesses. The disk access log entries are sorted by physical address or are grouped by file, then organized by logical address within each group. The processed log file is stored with the application program.

### SUMMARY OF THE INVENTION

The present invention provides an image forming apparatus and a control method therefor, which are provided with a history control function that is capable of using a limited history storage area effectively and of analyzing a history easily.

Accordingly, a first aspect of the present invention provides an image forming apparatus as specified in claims 1 to 10.

Accordingly, a second aspect of the present invention provides a history control method for an image forming apparatus as specified in claim 11 to 14.

The image forming apparatus according to the present invention can use the limited history storage area effectively, can intelligibly display the operation history about the file that the user accessed, and can analyze the operation history easily.

Further features of the present invention will become apparent from the following description of exemplary embodiments with reference to the attached drawings.

### BRIEF DESCRIPTION OF THE DRAWINGS

FIG. 1 is a schematic view showing a configuration of a network system to which an image forming apparatus according to an embodiment of the present invention is connected.
FIG. 2 is a block diagram schematically showing a hardware configuration of the image forming apparatus according to the embodiment of the present invention.
FIG. 3 is a block diagram schematically showing a software configuration of the image forming apparatus according to the embodiment of the present invention.
FIG. 4A and FIG. 4B are flowcharts showing a history control method executed by the image forming apparatus according to the embodiment of the present invention.
FIG. 5 is a view showing a configuration example of a history table that is controlled by a network file server of the image forming apparatus according to the embodiment of the present invention.
FIG. 6 is a view showing another configuration example of a history table that is controlled by a network file server of the image forming apparatus according to the embodiment of the present invention.
FIG. 7 is a view showing still another configuration example of a history table that is controlled by a network file server of the image forming apparatus according to the embodiment of the present invention.
FIG. 8A and FIG. 8B are flowcharts showing one part of a history pattern analysis/registration process executed in step S815 in the flowchart shown in FIG. 4B.
FIG. 9A and FIG. 9B are flowcharts showing the other part of the history pattern analysis/registration process executed in step S815 in the flowchart shown in FIG. 4B.
FIG. 10 is a view showing an example of a file operation log list screen displayed on a user interface of the image forming apparatus according to the embodiment of the present invention.
FIG. 11 is a view showing an example of a pop-up screen displayed when a "search/filter" button in FIG. 10 is pushed.
FIG. 12 is a view showing an example of a conventional command sequence between a client and a server when opening a file using the CIFS protocol.
FIG. 13 is a view showing an example of a conventional command sequence between the client and the server when reading a file using the CIFS protocol.
FIG. 14 is a view showing an example of a conventional command sequence between the client and the server when saving a file under editing using the CIFS protocol.
FIG. 15 is a view showing an example of a conventional command sequence between the client and the server when the client copies a file in the server to another path in the same server by using the CIFS protocol.

### DESCRIPTION OF THE EMBODIMENTS

Hereafter, embodiments according to the present invention will be described in detail with reference to the drawings.

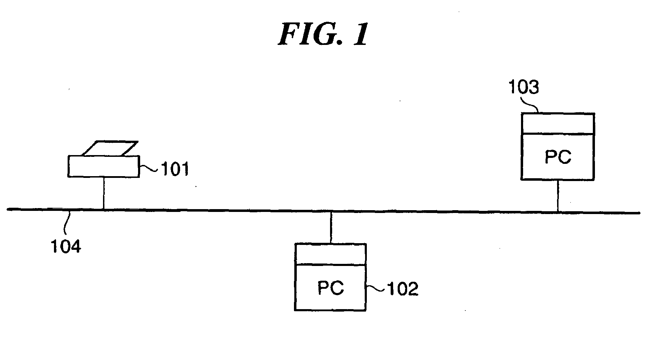

FIG. 1 is a schematic view showing a configuration of a network system to which an image forming apparatus according to an embodiment of the present invention is connected. In the network system, the image forming apparatus 101 and personal computers (PCs) 102 and 103 are connected via a network 104 so as to enable transmission and reception (communication) of data mutually.

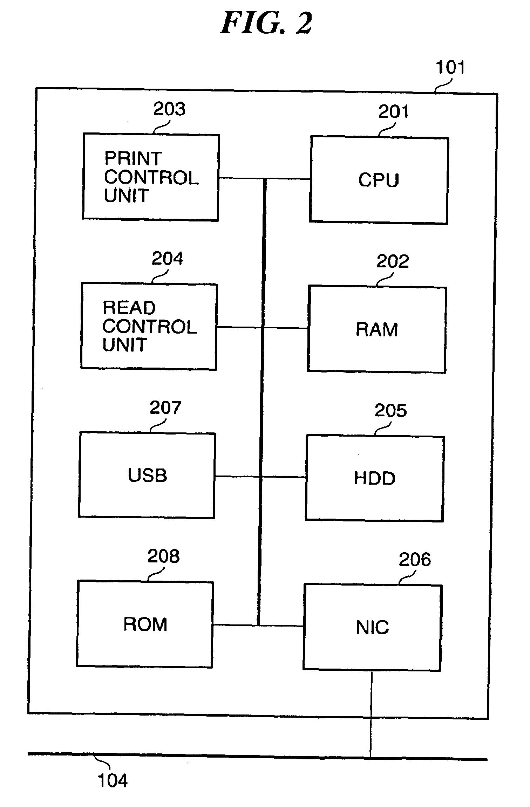

FIG. 2 is a block diagram schematically showing a hardware configuration of the image forming apparatus 101. The image forming apparatus 101 is provided with a CPU 201, a RAM 202, a print control unit 203, a read control unit 204, an HDD 205, an NIC 206, a USB 207, and a ROM 208. In the image forming apparatus 101, the CPU 201 controls the print control unit 203 and the read control unit 204 so as to achieve a copy function, a print function, etc. The programs for achieving and controlling these functions are stored in the ROM 208 or the HDD 205, are read into the RAM 202 at the time of starting of the image forming apparatus 101, and are executed by the CPU 201.

The NIC 206 transmits and receives a network packet via the network 104. The USB 207 is connected with an external storage device (an external data storing area) like an external USB memory device or an HDD with a USB interface. The HDD 205 includes a partition in which files of image data and document data, etc. are stored, and a partition for storing a history about file operations as a history storage area. In the image forming apparatus 101, image data read by scanning process, image data and document data received via the network 104 are stored into the HDD 205 or the external data storing area connected to the USB 207 as a file.

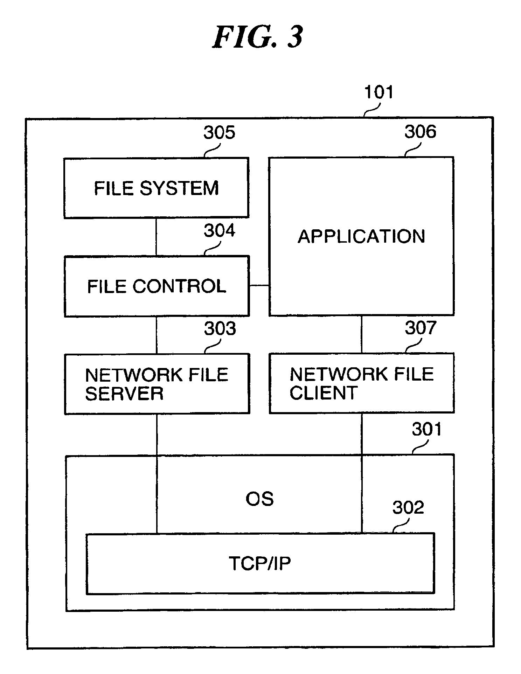

FIG. 3 is a block diagram schematically showing a software configuration of the image forming apparatus 101. All the functions of blocks are achieved when the CPU 201 executes a predetermined program. An OS 301 manages various processes and tasks of the image forming apparatus 101, executes and controls each task, and holds a TCP/IP protocol stack 302 (referred to as a "TCP/IP 302" hereafter).

The TCP/IP 302 controls a network communication of the image forming apparatus 101. Specifically, the TCP/IP 302 manages and controls a network packet communication that the image forming apparatus 101 transmits a request packet to the other side (for example, the PC 102) via the network 104 and receives a packet from the other side.

A network file server 303 performs a process relevant to a network protocol when receiving a request for operating a file (referred to as a "file operation request" hereafter) from the other side via the network 104. The network file server 303 performs a similar process to a request from the image forming apparatus 101 itself using a network loop back communication. It should be noted that the network protocol mostly used is the CIFS. Types of the file operation requests from the other side include writing of a file, reading of a file, copying of a file, movement of a file, renaming of a file, deletion of a file, and acquisition of a file attribute. The network file server 303 has a function as a history holding unit for holding a history about file operations. From a point of view of hardware, the history about file operations is stored in the partition as the history storage area provided in the HDD 205.

A file control 304 requests a file I/O of a file system 305 for each of the file operation requests after the network file server 303 has performed the protocol process. That is, the file control 304 intervenes between the network file server 303 and the file system 305, which are performing the network process, and performs a file control. The file control 304 performs the file control individually to the external device connected to the USB 207. The file system 305 manages and controls a file and its storage area in the HDD 205 of the image forming apparatus 101. Specifically, the file system 305 controls a file I/O, a sector, a block, etc.

An application 306 controls the user interface that displays various kinds of information about files and directories, and processes and controls image data scanned by the image forming apparatus 101. A network file client 307 generates and transmits a network packet in order to request a control and a command of data processed by the application 306 as a file control protocol from the other side via the network 104.

In the image forming apparatus 101, the network file server 303 receives and analyzes the file operation request transmitted from the other side via the network 104 through the TCP/IP 302. Then, the network file server 303 issues the analyzed file operation request to the file system 305 through the file control 304. The processing result by the file system 305 is transmitted to the other side from the network file server 303 through the TCP/IP 302.

In the image forming apparatus 101, the application 306 issues a command, which instructs to store the image data generated by the imaging process like scanning into the HDD 205 or the external data storing area, to the file system 305 via the file control 304.

When a file operation request destination inputted through the user interface of the application 306 is a file stored in the HDD 205, the application 306 instructs the requested file operation to the file system 305 via the file control 304.

When a file operation request destination inputted through the user interface of the application 306 is a file stored in the other side via the network 104, the network file client 307 requests the file operation of the other side via the TCP/IP 302.

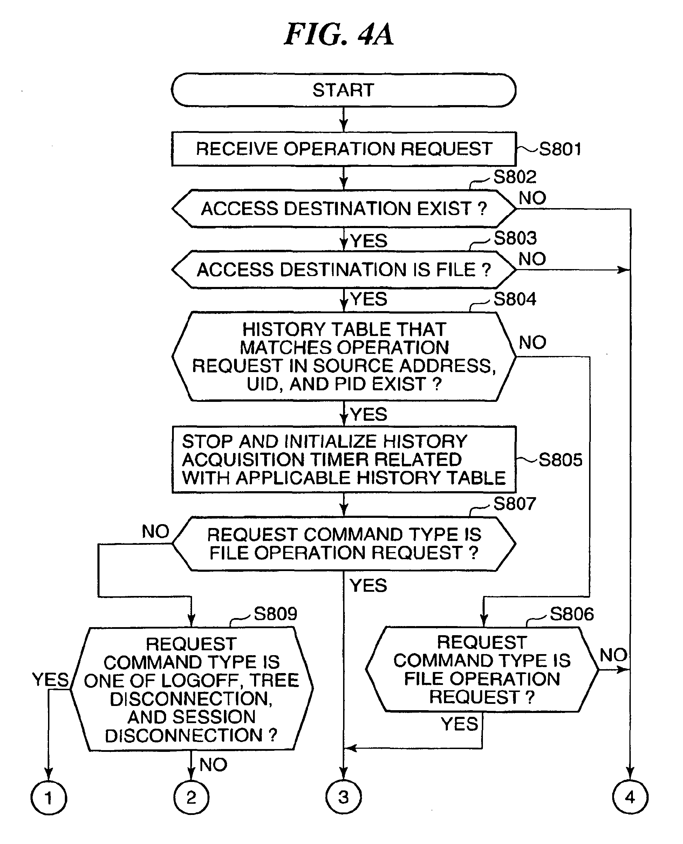

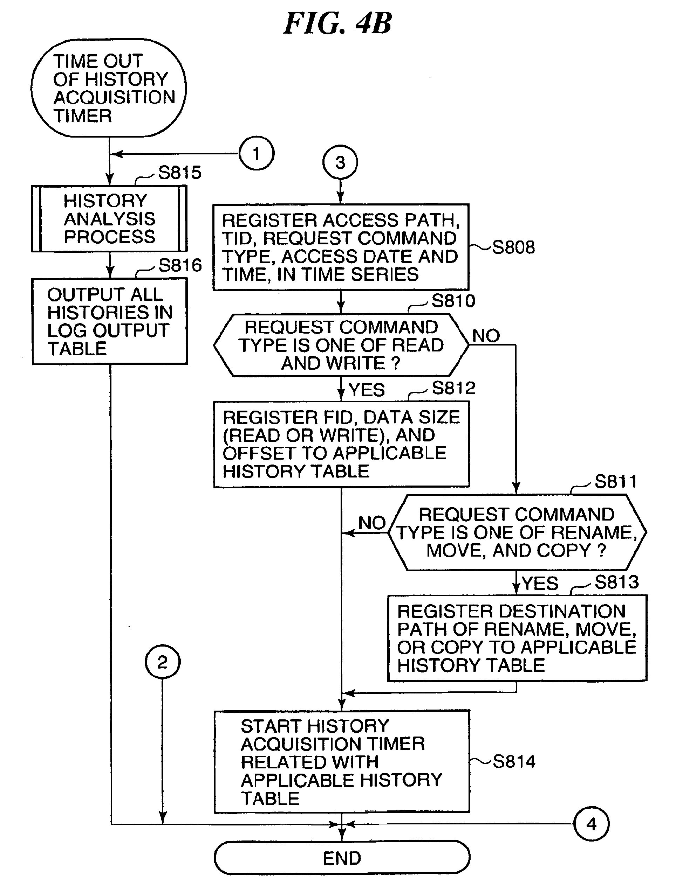

FIG. 4A and FIG. 4B are flowcharts showing a history control method according to this embodiment. Here, the image forming apparatus 101 and the PC 102 (or the PC 103) corresponds to a server and a client, respectively.

The network file server 303 of the image forming apparatus 101 receives an operation request from the PC 102 as the client via the TCP/IP 302 (step 5801). The network file server 303 analyzes the received data to find an access destination that is a target of the operation request, and inquires of the file system 305 through the file control 304 whether the access destination is an existing path (step S802).

When the access destination does not exist (NO in the step S802), the network file server 303 does not acquire a file operation history, and finishes the process. In this case, the network file server 303 performs a required process in response to the request from the PC 102, generates the response data to the processing result, and transmits the data to the PC 102. It should be noted that this process is not illustrated in FIG. 4A and FIG. 4B. When the access destination exists (YES in the step S802), the network file server 303 determines whether the path of the access destination is a file (step 5803).

When the access destination is other than a file (NO in the step S802), the network file server 303 does not acquire a file operation history, and finishes the process. In this case, the network file server 303 performs a required process in response to the request from the PC 102, generates the response data to the processing result, and transmits the data to the PC 102. It should be noted that this process is not illustrated in FIG. 4A and FIG. 4B.

When the access destination is a file (YES in the step S803), the network file server 303 proceeds with the process to step S804. In the step S804, the network file server 303 determines whether there is a history table that matches the operation request in the source address (i.e., the address of the PC 102), the user ID, and the process ID (PID) among the history tables that are controlled inside the server. It should be noted that the history tables are held in the partition provided as the history storage area in the HDD 205 from a point of view of hardware. The process ID is allocated to each of file operations (reading, writing, etc.) concerning an operation request.

When the matched history table does not exist (NO in the step S804), the network file server 303 determines the type (referred to as a "request command type" hereafter) of the operation request from the PC 102 (step 5806). When the request command type is the file operation request (YES in the step S806), the process proceeds to step S808. It should be noted that the file operation request in the step S806 includes Read, Write, Delete, Rename, Move, and Copy.

As a specification of the CIFS protocol, when the PC 102 sets a file deletion flag at the time of the file open request, the network file server 303 will delete a target file when receiving a file close request from the PC 102. This file operation is included in the deletion request of the file operation request. Therefore, the network file server 303 inspects a file deletion flag at the time of receiving the file open request, and determines whether it is the deletion request.

When the operation request is not a file operation request (NO in the step S802), the network file server 303 does not acquire a file operation history, and finishes the process. In this case, the network file server 303 performs a required process in response to the request from the PC 102, generates the response data to the processing result, and transmits the data to the PC 102. It should be noted that this process is not illustrated in FIG. 4A and FIG. 4B.

When the matched history table exists (YES in the step S804), it is considered that the network file server 303 have received the file operation request from the PC 102, and a history acquisition timer mentioned later is operating. Therefore, the network file server 303 stops and initializes the history acquisition timer related with the applicable history table (step S805), and then, proceeds with the process to step S807. In the step S807, the network file server 303 inspects the request command type of the operation request received from the PC 102 in the same manner as the process in the step S806. When the request command type is the file operation request (YES in the step S807), the network file server 303 proceeds with the process to step S808.

In the step S808, the network file server 303 registers the access path, the tree ID (TID), the request command type, and the access date and time in the applicable history table in the order of the request from the PC 102, i.e., in the time sequence. Then, the network file server 303 determines whether the request command type is one of READ and WRITE (step S810).

When the request command type is READ or WRITE (YES in the step S810), the network file server 303 acquires data size and an offset value from the operation request received from the PC 102, and registers them into the applicable history table (step S812). Then, the network file server 303 proceeds with the process to step S814. When the request command type is not READ or WRITE (NO in the step S810), the network file server 303 determines whether the request command type is one of RENAME, MOVE, and COPY (step S811).

When the request command type is one of RENAME, MOVE, and COPY (YES in the step S811), the network file server 303 proceeds with process to step S813. In the step S813, the network file server 303 registers the destination path corresponding to the applicable request command type (a rename destination path, a move destination path, or a copy destination path) into the history table, and then, proceeds with the process to step S814. When the request command type is not RENAME, MOVE, or COPY (NO in the step S811), the network file server 303 proceeds with the process to the step S814.

In the step S814, the network file server 303 associates a history acquisition timer to the applicable history table, and starts the timer. Accordingly, the network file server 303 waits for a file operation request as a next target of which history is recorded from the PC 102 until the fixed time set to the history acquisition timer elapses. The network file server 303 finishes this process when the history acquisition timer expires before receiving the next request from the PC 102. When this process finishes, the network file server 303 performs a required process in response to the request from the PC 102, generates the response data to the processing result, and transmits the data to the PC 102.

When the request command type is not the file operation request (NO in the step S807), the network file server 303 proceeds with the process to step S809. In the step S809, the network file server 303 determines whether the request command type is one of logoff, tree disconnection, and session disconnection. That is, it is determined whether the request command type is a command for finishing the file operation.

When the request command type is not logoff, tree disconnection, or session disconnection (NO in the step S809), the network file server 303 finishes this process. In this case, the network file server 303 performs a required process in response to the request from the PC 102, generates the response data to the processing result, and transmits the data to the PC 102. When the request command type is one of logoff, tree disconnection, and session disconnection (YES in the step S809), the network file server 303 determines that a series of file operations are finished, and proceeds with the process to step S815 in order to analyze the recorded history.

The timeout of the history acquisition timer that started in the step S814 means that the network file server 303 did not receive the next file operation request from the PC 102 between the fixed time. Therefore, in this case, the network file server 303 finishes this process as mentioned above, considers that a series of file operations were completed, and starts the history analysis process.

The history acquisition timer can be changed as a setting item in the image forming apparatus 101. In the step S815, the network file server 303 analyzes a history pattern in the applicable history table. The network file server 303 presumes the file operation by the user of the PC 102 based on the analysis result, and registers the file operation log acquired into a log output table that is managed by the server itself. The contents in the step S815 will be described later.

Next, the network file server 303 displays the file operation log in the log output table onto the local or remote user interface, and outputs it as a log file, or transmits to a log management server that is not shown in FIG. 1 (step S816). Then, the network file server 303 finishes the process.

In the flowcharts in FIG. 4A and FIG. 4B, when it is determined that the request command type is not the file operation request in the step S806, for example, such a request command is not registered into the history table. This enables to avoid recording the command irrelevant to the file operation (i.e., the commands only for negotiation as shown in the conventional communication in the step S401 in FIG. 12) into the history table.

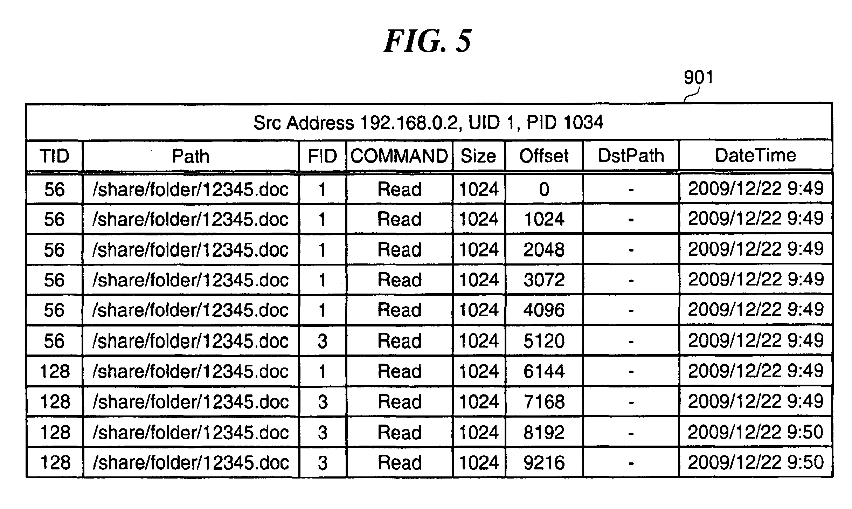

FIG. 5 is a view showing a configuration example of a history table that is controlled by the network file server 303 of the image forming apparatus 101. The history table 901 is an example of a history table that the network file server 303 registered and generated according to the process in FIG. 4A and FIG. 4B when the PC 102 (or the PC 103) as a client requested to read files.

When the read requests to the same file are specified from the history table 901, the network file server 303 analyzes the histories of the read requests received from the PC 102 (or the PC 103) with the same file path. This history analysis has three features.

The first feature is that the history table has at least one history of a read request. That's because a plurality of file read requests occur to read a file, as shown in the step S503 of the conventional process in FIG 13. The second feature is that all the data has been read from a reading target file requested by the PC 102 (or the PC103). Reading of a partial offset in a file is not treated as the reading operation by a user. The third feature is that a time interval between the specific read request issued by the PC 102 (or the PC 103) and the next read request is so short that the read requests to the same file by the same user are able to be distinguished from other requests. It should be noted that the time interval in the third feature can be set on the image forming apparatus 101. It is preferable that the time interval is shorter than 0.2 seconds in consideration of a network environment in which the image forming apparatus 101 is used.

The conditions concerning these three features are inspected by the network file server 303 under the condition where the transmitting source IP address, the process ID, and the user ID match. When there are histories that satisfy all of these three features, the network file server 303 merges the histories into a file read request received from the PC 102 (or the PC 103). Although the history table 901 only describes the read requests from the PC 102 (or the PC 103), the above-mentioned three features are applicable to write requests from the PC 102 (or the PC 103) similarly.

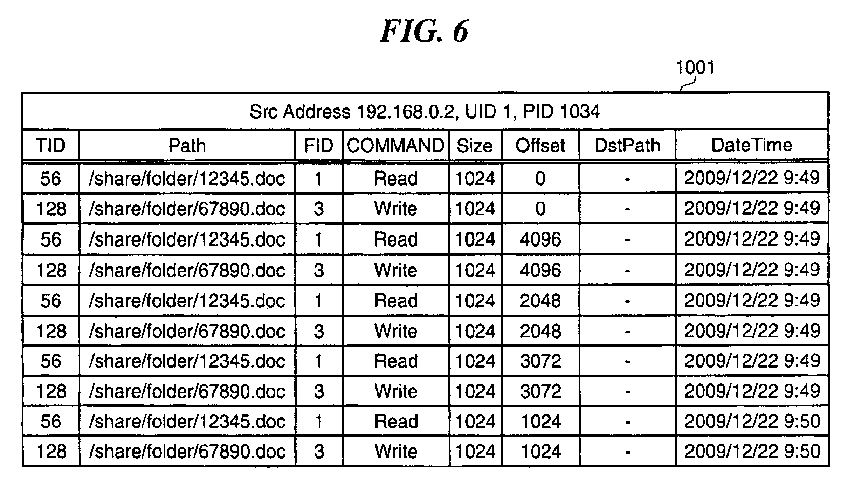

FIG. 6 is a view showing another configuration example of a history table that is controlled by the network file server 303 of the image forming apparatus 101. The history table 1001 shows a history list that is different from the history table 901. The history table 1001 is an example of a history table that the network file server 303 registered and generated according to the process in FIG. 4A and FIG. 4B when files are copied to different paths in the image forming apparatus 101.

In this case, the network file server 303 analyzes histories of the read requests received from the PC 102 (or the PC 103) with the same tree ID, the same file ID, and the same file path. Furthermore, the network file server 303 analyzes histories of the write requests received from the PC 102 (or the PC 103) with the same tree ID, the same file ID, and the same file path. This history analysis has six features.

The first feature is that the history table 1001 has at least one pair of histories of a read request and a write request. That's because a plurality of file read requests and file write requests occur to copy a file, as shown in the steps S705 and S706 of the conventional process in FIG 15. The second feature is that all the data has been read from a reading target file requested by the PC 102 (or the PC103). Reading of a partial offset in a file is not treated as the reading operation by a user. The third feature is that the data size written into the file according to the write request issued by the PC 102 (or the PC 103) is equal to the data size read from the file.

The fourth feature is that a time interval between the specific read request issued by the PC 102 (or the PC 103) and the next read request is short. This enables the network file server 303 to distinguish a file copy to a different path in the image forming apparatus 101 by a user from a regular file read request by a user. The fifth feature is that a time interval between the specific write request issued by the PC 102 (or the PC 103) and the next write request is short. This enables the network file server 303 to distinguish a file copy to a different path in the image forming apparatus 101 by a user from a regular file write request by a user. The sixth feature is that a time interval between the specific read request issued by the PC 102 (or the PC 103) and the next write request is short.

The time intervals in the fourth, fifth, and six features can be set on the image forming apparatus 101. It is preferable that the time intervals are shorter than 0.2 seconds in consideration of the network environment in which the image forming apparatus 101 is used. The conditions concerning these six features are inspected by the network file server 303 under the condition where the transmitting source IP address, the process ID, and the user ID match. When there are histories that satisfy all of these six features, the network file server 303 merges the histories into a request to copy a file to a different path in the image forming apparatus 101.

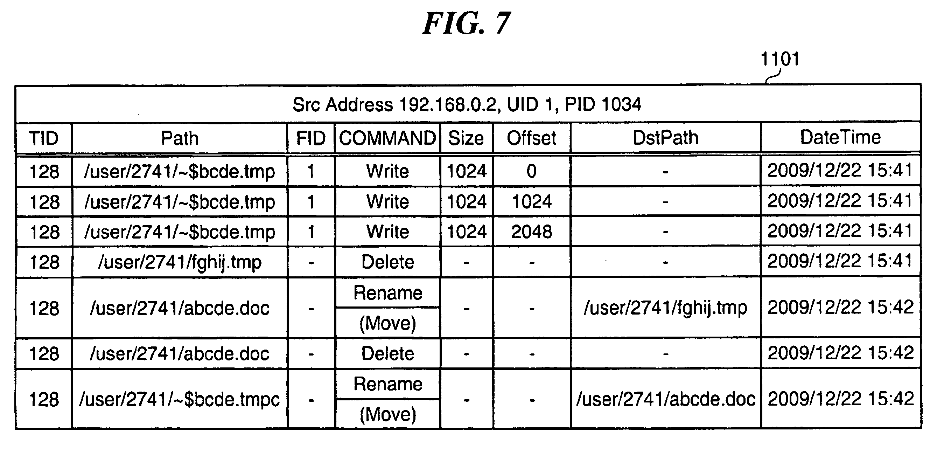

FIG. 7 is a view showing still another configuration example of a history table that is controlled by the network file server 303 of the image forming apparatus 101. The history table 1101 shows a history list that is different from the history table 901 in FIG. 5 and the history table 1001 in FIG. 6. The history table 1101 is an example of a history table that the network file server 303 registered and generated according to the process in FIG. 4A and FIG. 4B when a user operates the PC 102 (or the PC 103) to edit and save a file.

The history table 1101 shows the histories when the user of the PC 102 (or the PC 103) edits and saves a file (/user/2741/abcde.doc). In this case, it seems to edit the file (abcde.doc) from a viewpoint of the user. However, an actually edited file is a temporary file (/user/2741/∼$bcde.tmp).

When the operation to the temporary file at the time of saving the edited file is specified in the history table 1101, the network file server 303 analyzes the histories of the write requests received from the PC 102 (or the PC 103) with the same file path. The network file server 303 analyzes the file paths that the PC 102 (or the PC 103) requested to rename, to move, or to copy. This history analysis has nine features.

The first feature is that the history table 1101 has at least one history of a write request. The second feature is that all the data has been written to a writing target file requested by the PC 102 (or the PC103). It can be checked whether all the data has been written according to a file size notice (an EOF setting notice) that the PC 102 (or the PC 103) issues before issuing the write request to the network file server 303. The third features is that the history table 1101 has at least two histories of requests to rename, to move, and to copy.

The fourth feature is that the requests to write, to rename, to move, and to copy that are issued by the PC 102 (or the PC 103) have the same tree IDs. The fifth feature is that the file path of the write requests that the PC 102 (or the PC 103) issued is identical to the source file path of the requests to rename, to move, or to copy that the PC 102 (or the PC 103) issued. The sixth feature is that the source path of the requests to rename, to move, or to copy that were issued by the PC 102 (or the PC 103) is identical to the destination path of the other requests to rename, to move, or to copy that were issued by the PC 102 (or the PC 103) thereafter.

The seventh feature is that a time interval between the specific write request issued by the PC 102 (or the PC 103) and the next write request is short. This enables to distinguish the write requests by the same user to the same file from other requests. The eighth feature is that a time interval between the last write request issued by the PC 102 (or the PC 103) and the next request to rename, to move, or to copy is short. The ninth feature, which is related with the third feature mentioned above, is that a time interval among the requests to rename, to move, or to copy that the PC 102 (or the PC 103) issued is short. According to the eighth and ninth features, the request to rename, to move, or to copy a file from a user can be distinguished from an operation of a temporary file by the PC 102 (or the PC 103) at the time of saving an edited file. The time intervals in the seventh, eighth, and nine features can be set on the image forming apparatus 101. It is preferable that the time intervals are shorter than 0.2 seconds in consideration of the network environment in which the image forming apparatus 101 is used.

The conditions concerning these nine features are inspected by the network file server 303 under the condition where the transmitting source IP address, the process ID, and the user ID match. When there are histories that satisfy all of these nine features, the network file server 303 merges the histories in the history table into an operation of a temporary file at the time of saving an edited file. In that case, the network file server 303 merges the histories into the file path that matches in the content of the sixth feature mentioned above as a file save request from the user.

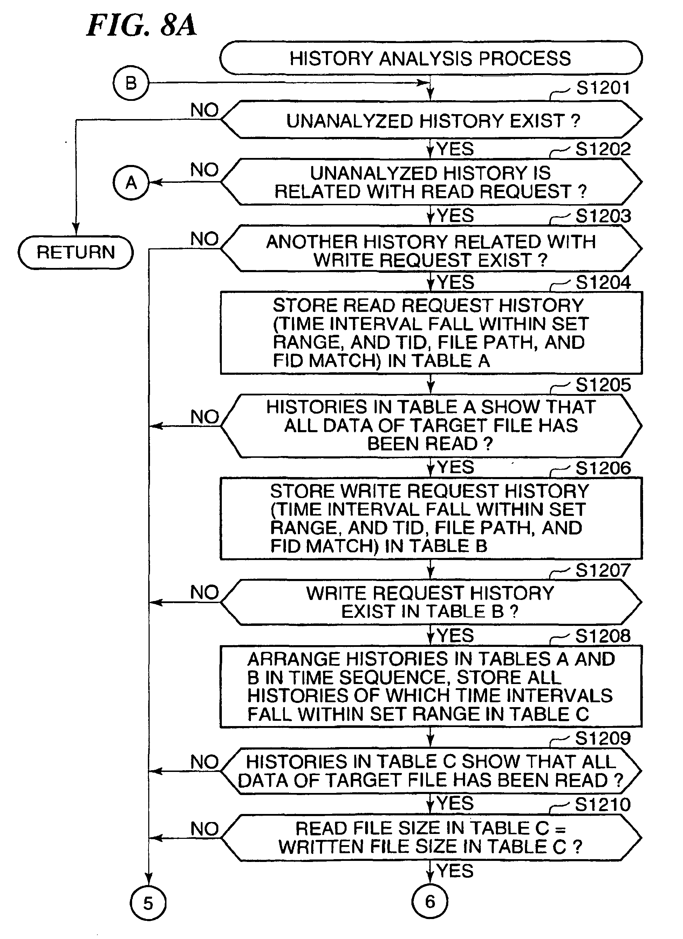

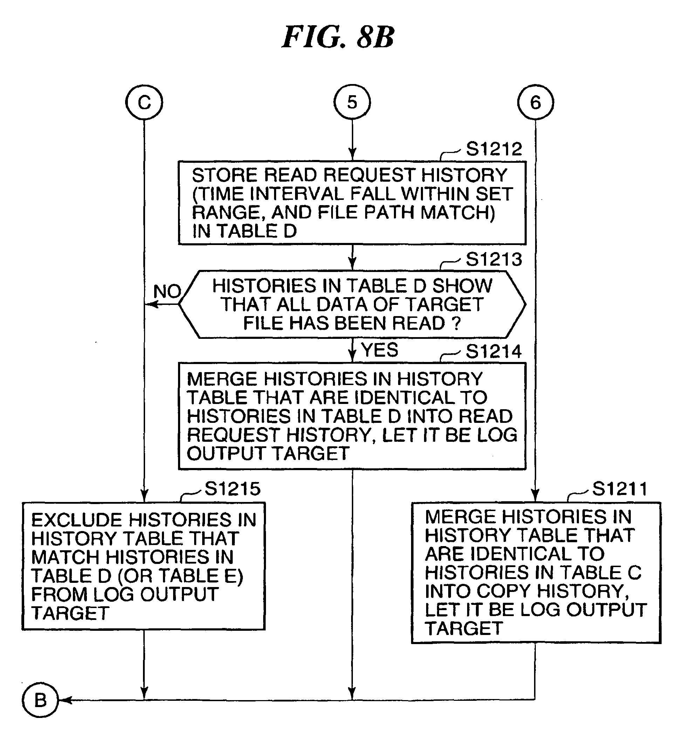

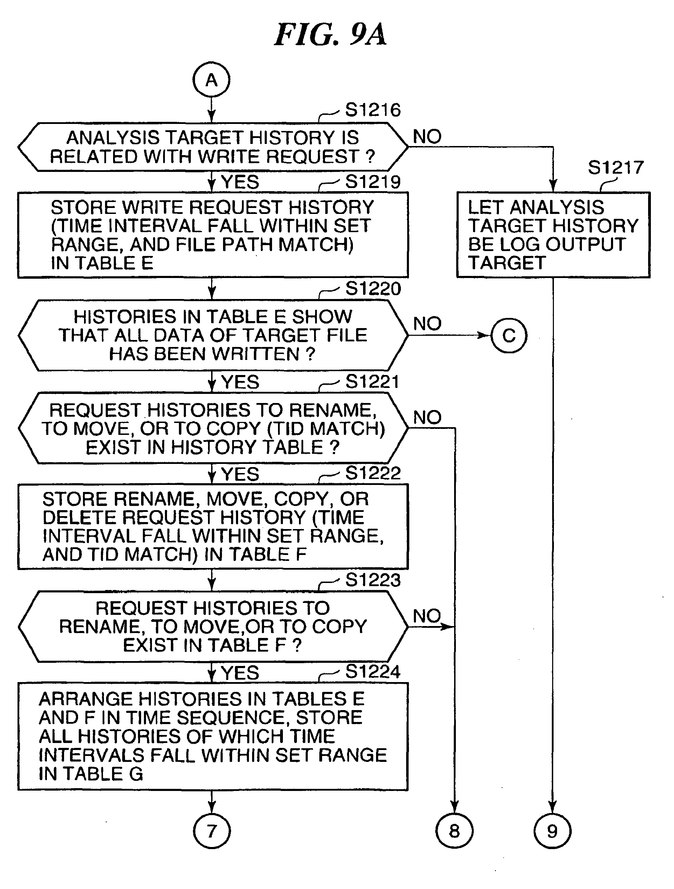

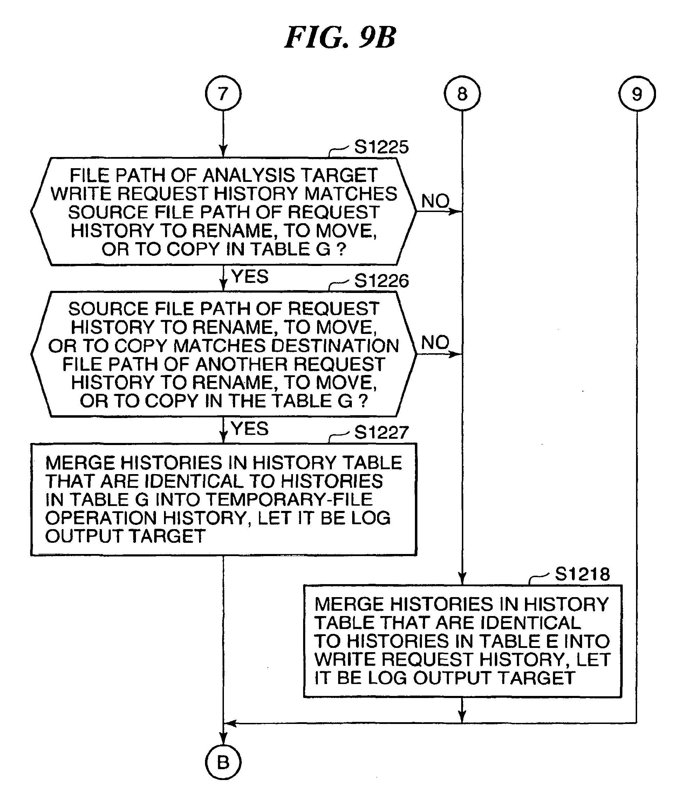

FIG. 8A, FIG. 8B, FIG. 9A, and FIG. 9B are flowcharts showing details of the history analysis process executed in the step S815 in the flowcharts shown in FIG. 4A and FIG. 4B. The flowcharts in FIG. 8A, FIG. 8B, FIG. 9A, and FIG. 9B show process contents in consideration of the above-mentioned contents described in FIG. 5, FIG. 6, and FIG. 7.

First, the network file server 303 determines whether an unanalyzed history exists in the history table (step S1201). When an unanalyzed history does not exist (NO in the step S1201), the history analysis process is finished, and the process returns to the process in FIG. 4A. When a history that needs to be analyzed remains (YES in the step S1201), the network file server 303 determines whether an analysis target history is related with a read request (step S1202).

When the analysis target history is not related with a read request (NO in the step S1202), the network file server 303 proceeds with the process to step S1216 in FIG. 9A. When the analysis target history is related with a read request (YES in the step S1202), the network file server 303 determines whether another unanalyzed history that is related with a write request exists (step S1203).

When an unanalyzed write request history does not exist (NO in the step S1203), the network file server 303 proceeds with the process to step S1212 mentioned later. When an unanalyzed write request history exists (YES in the step S1203), the network file server 303 extracts histories that match the unanalyzed write request history in the tree ID (TID), the file path, and the file ID (FID) from all the read request histories in the history table (step S1204). In the step S1204, the network file server 303 inspects a time interval between each of the extracted read request histories and the next read request history based on the access date and time of each history. Then, the network file server 303 further extracts only a read request history of which the time interval falls within a predetermined set range from the extracted read request histories, and stores it into a table (referred to as a "table A" hereafter). The table A is held in the partition provided in the HDD 205 as the history storage area. Tables B through G mentioned later are held in the HDD 205 in the same manner.

Next, the network file server 303 inspects whether the PC 102 as a client has read all the data of the target file on the basis of the offsets and the data sizes of all the read request histories in the table A (step S1205). When not all the data of the target file has been read (NO in the step S1205), the network file server 303 proceeds with the process to step S1212.

When all the data of the target file has been read (YES in the step S1205), the network file server 303 extracts histories that match the unanalyzed write request history in the tree ID, the file path, and the file ID from all the write request histories in the history table (step S1206). In the step S1206, the network file server 303 inspects a time interval between each of the extracted write request histories and the next write request history based on the access date and time of each history. Then, the network file server 303 further extracts only a write request history of which the time interval falls within the set range from the extracted write request histories, and stores it into a table (referred to as a "table B" hereafter).

Next, the network file server 303 inspects whether a write request history exists in the table B (step S1207). When a write request history does not exist (NO in the step S1207), the network file server 303 proceeds with the process to step S1212. When a write request history exists (YES in the step S1207), the network file server 303 arranges the histories in the tables A and B in the time sequence, and inspects the time interval between each history and the next history based on the access date and time of each history (step S1208). In the step S1208, the network file server 303 extracts all the histories of which the time intervals fall within the set range, and stores them into a table (referred to as a "table C", hereafter).

Next, the network file server 303 inspects whether the PC 102 has read all the data of the target file on the basis of the data sizes and the offset values of all the read request histories in the table C (step S1209). When not all the data of the target file has been read (NO in the step S1209), the network file server 303 proceeds with the process to step S1212. When all the data of the target file has been read (YES in the S1209), the network file server 303 proceeds with the process to the step S1210. In the step S1210, the network file server 303 inspects whether the file size read by the PC 102 is equal to the written file size on the basis of the offset values and the data sizes for reading and that for writing in the table C.

When the file sizes do not match (NO in the step S1210), the network file server 303 proceeds with the process to step S1212. When the file sizes match (YES in the step S1210), the network file server 303 merges the histories in the history table that are identical to the histories in the table C into a copy history, and let it be a log output target (step S1211). After the step S1211, the network file server 303 returns the process to step S1201. The histories that became the log output target in the step S1211 are treated as the analyzed histories, and do not become targets of the history analysis processes hereafter.

In step S1212, the network file server 303 extracts read request histories that match the analyzed target read request history in the file path from all the read request histories in the history table. In the step S1212, the network file server 303 inspects a time interval between each of the extracted read request histories and the next read request history based on the access date and time of each history. Then, the network file server 303 further extracts only a read request history of which the time interval falls within the set range from the extracted read request histories, and stores it into a table (referred to as a "table D" hereafter).

Next, the network file server 303 inspects whether the PC 102 read all the data of the target file on the basis of the data sizes and the offset values of all the read request histories in the table D (step S1213). When not all the data of the target file has been read (NO in the step S1213), the network file server 303 proceeds with the process to step S1215 mentioned later. When all the data of the target file has been read (YES in the step S1210), the network file server 303 merges the histories in the history table that are identical to the histories in the table D into a read request history, and let it be a log output target (step S1214). Then, the network file server 303 returns the process to the step S1201. The histories that became the log output target in the step S1214 are treated as the analyzed histories, and do not become targets of the history analysis processes hereafter.

In the step S1215, the network file server 303 excludes histories in the history table that match the histories in the table D from the log output target, and returns the process to the step S1201. The histories that are excluded from the log output target in the step S1215 are treated as the analyzed histories, and do not become targets of the history analysis processes hereafter.

When the analytical target history is not related with a read request (NO in the step S1202), the network file server 303 determines whether the analysis target history is related with a write request (step S1216 in FIG. 9A). When the analysis target history is not related with a write request (NO in the step S1216), the network file server 303 lets the analysis target history be a log output target (step S1217). Then, the network file server 303 returns the process to the step S1201. The histories that became the log output target in the step S1217 are treated as the analyzed histories, and do not become targets of the history analysis processes hereafter.

When the analysis target history is related with a write request (YES in the step S1216), the network file server 303 proceeds with the process to step S1219. In step S1219, the network file server 303 extracts write request histories that match the analysis target history in the file path from all the write request histories in the history table. In the step S1219, the network file server 303 inspects a time interval between each of the extracted write request histories and the next write request history based on the access date and time of each history. Then, the network file server 303 further extracts only a write request history of which the time interval falls within the set range from the extracted write request histories, and stores it into a table (referred to as a "table E" hereafter).

After the step S1219, the network file server 303 inspects whether the PC 102 has written all the data of the target file on the basis of the offsets and the data sizes of all the write request histories in the table E (step S1220). It can be checked whether all the data has been written according to a file size notice (an EOF setting notice) that the PC 102 issues before issuing the write request to the network file server 303.

When not all the data of the target file has been written (NO in the step S1220), the network file server 303 proceeds with the process to step S1215 mentioned above. In this case, in the step S1215, the network file server 303 excludes histories in the history table that match the histories in the table E from the log output target, and then, returns the process to the step S1201. Even when the process proceeds from the step S1220 to the step S1215, the histories that are excluded from the log output target in the step S1215 are treated as the analyzed histories, and do not become targets of the history analysis processes hereafter.

When all the data of the target file has been written (YES in the step S1220), the network file server 303 proceeds with the process to step S1221. In the step S1221, the network file server 303 inspects whether a plurality of request histories to rename, to move, or to copy that use the same tree ID as the analysis target write request history exist in the history table. Here, the reason why a plurality of request histories are checked is that the operation to a temporary file at the time of saving an edited file requires a plurality of actions of copying, movement, or renaming, in general.

When a plurality of request histories to rename, to move, or to copy do not exist (NO in the step S1221), the network file server 303 proceeds with the process to step S1218. In the step S1215, the network file server 303 merges histories in the history table that match the histories in the table E into a write request history, lets it be a log output target, and then, returns the process to the step S1201. The histories that became the log output target in the step S1218 are treated as the analyzed histories, and do not become targets of the history analysis processes hereafter.

When a plurality of request histories to rename, to move, or to copy exist (YES in the step S1221), the network file server 303 proceeds with the process to step S1222.

In step S1222, the network file server 303 extracts all the request histories to rename, to move, to copy, or to delete that use the same tree ID as the analysis target write request history. The network file server 303 inspects a time interval between each of the extracted request histories and the next request history based on the access date and time of each history. The network file server 303 extracts only a history of which the time interval falls within a set range, and stores it into a table (referred to as a "table F", hereafter).

Then, the network file server 303 inspects whether a plurality of request histories to rename, to move, or to copy exist in the table F (step S1223). The reason why a plurality of request histories are checked is that the operation to a temporary file at the time of saving an edited file requires a plurality of actions of copying, movement, or renaming, in general. When a plurality of request histories to rename, to move, or to copy do not exist (NO in the step S1223), the network file server 303 proceeds with the process to step S1218. When a plurality of request histories to rename, to move, or to copy exist (YES in the step S1223), the network file server 303 proceeds with the process to step S1224.

In the step S1224, the network file server 303 arranges the histories in the tables E and F in the time sequence, and inspects the time interval between each history and the next history based on the access date and time of each history. Then, the network file server 303 extracts all the histories of which the time intervals fall within the set range, and stores them into a table (referred to as a "table G", hereafter).

After the step S1224, the network file server 303 checks whether the file path of the analysis target write request history matches one of the source file paths of the request histories to rename, to move, or to copy in the table G (step S1225). When the file paths does not match (NO in the step S1225), the network file server 303 proceeds with the process to step S1218. When the file paths match (YES in the step S1225), the network file server 303 proceeds with the process to step S1226.

In the step S1226, the network file server 303 inspects whether a source file path of a request history to rename, to move, or to copy matches a destination file path of another request history to rename, to move, or to copy in the table G (step S1226). When the file paths do not match (NO in the step S1226), the network file server 303 proceeds with the process to step S1218. When the paths match (YES in the step S1226), the network file server 303 merges the histories in the history table that are identical to the histories in the table G into a temporary-file operation history, and lets it be a log output target (step S1227). After the step S1227, the network file server 303 returns the process to step S1201. The histories that became the log output in the step S1227 are treated as the analyzed histories, and do not become targets of the history analysis processes hereafter. As described above, since the histories about file operations are efficiently merged, the limited history storage area managed within the image forming apparatus 101 is utilizable effectively. The histories that became the log output targets in the steps S1211, S1215, S1217, S1218, and S1227 are stored in the predetermined storage area in the HDD 205 as operation logs to a file.

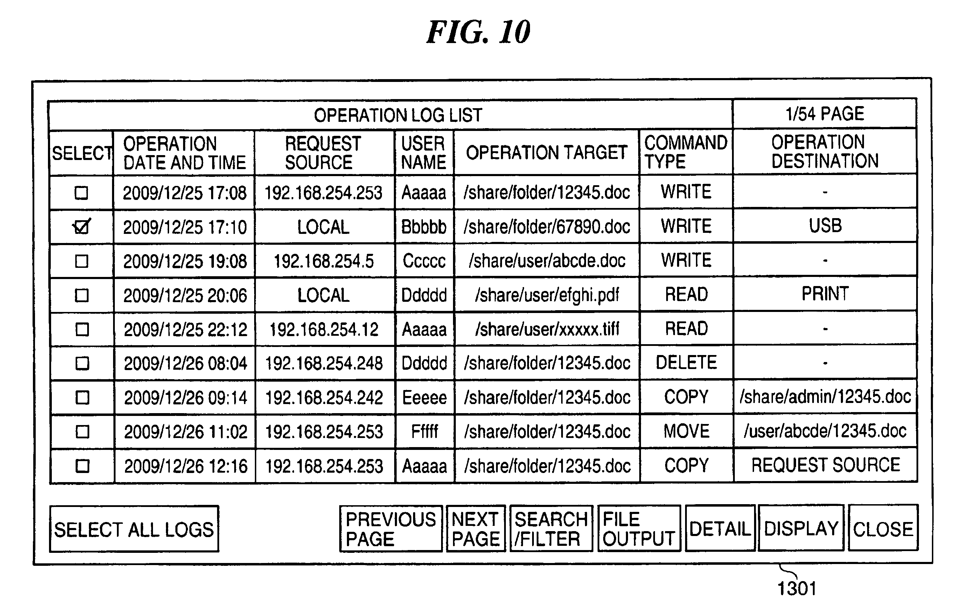

A display example of the user interface that shows the histories processed by the image forming apparatus 101 will be described below. FIG. 10 is a view showing an example of a file operation log list screen displayed on the user interface of the image forming apparatus 101. Namely, the file operation log list screen 1301 displays the histories that are stored in the predetermined memory area of the HDD 205 as the log output targets that have been generated by processing and merging histories by the network file server 303 of the image forming apparatus 101 according to the flowcharts shown in FIG. 4A, FIG. 4B, FIG. 8A, FIG. 8B, FIG. 9A, and FIG. 9B. It should be noted that the application 306 of the image forming apparatus 101 bears a display process of the file operation log list screen 1301.

The display item in the file operation log list screen 1301 are operation date and time, information about a request source of an operation, an operation user name, a file path of an operation target, a command type of a user's operation, and information about an operation destination, in this example. About the operation date and time, the image forming apparatus 101 initially displays the date and time of a file operation performed by a user. After merging the histories according to the processes shown in FIG. 4A, FIG. 4B, FIG. 8A, FIG. 8B, FIG. 9A, and FIG. 9B, the image forming apparatus 101 displays the date and time of the last process for the applicable history. About the request source, the image forming apparatus 101 mainly displays an IP address of a remote request source apparatus (for example, the PC 102) or a "LOCAL" that means the image forming apparatus 101 itself.

About the user name, the image forming apparatus 101 displays the user name who logged in, when the image forming apparatus 101 requires authentication. When the authentication is required, common user names such as a guest, a common are displayed. About the operation target, the image forming apparatus 101 mainly displays a document file, an image file, a text file, etc., but can display any files regardless of a format as well as a general file server. It should be noted that the image forming apparatus 101 can change an available file type (a printable file, a document file, etc.) by setting therein.

About the command type, the image forming apparatus 101 displays a type of operation (command) that a user performed to an operation target file. The image forming apparatus 101 displays one of READ, WRITE, MOVE, RENAME, COPY, and DELETE as the command type. About the operation target, the image forming apparatus 101 displays a destination of movement (renaming) when the command type is MOVE (RENAME). A copy destination is displayed when the command type is COPY. The movement (renaming) and the copy are file operations within the image forming apparatus 101. When a user moves, renames, or copies a file to out of the image forming apparatus 101, the operation type is treated as READ. When copying a file to the devices (a memory, and HDD, etc.) connected to the USB 207 of the image forming apparatus 101, the image forming apparatus 101 displays the USB as the operation target.

The file operation log list screen 1301 is provided with a touch-panel function so that a user can select various selection items, or the image forming apparatus 101 has operation buttons (not shown) by which a user can select the items.

The file operation log list screen 1301 is provided with a select column. When a user who browses the log checks a select box of a desired history and pushes a "file output" button, the log of the selected history is stored in the HDD 205 in the image forming apparatus. Accordingly, a user who operates an apparatus on the network can obtain a log file, and the image forming apparatus 101 can notify a remote history control server of the history.

When a user who browses the log checks a select box of a desired history in the file operation log list screen 1301 and pushes the "DELETE" button, the selected log can be deleted. Accordingly, since the user can individually delete a log that does not affect security directly, for example, the history storage area in the image forming apparatus 101 is utilizable effectively. When a user pushes a "SELECT ALL LOGS" button in the file operation log list screen 1301, all the select box are checked simultaneously, which enables to output the plurality of logs to a file or to delete them at a time.

When there are too many logs to be displayed within one screen of the file operation log list screen 1301, a user can display hidden pages by pushing a "NEXT PAGE" button or a "PREVIOUS PAGE" button to find a desired log. When a user pushes a desired item among the select column, the operation date and time, the request source, the user name, the operation target, the command type, and the operation destination in the file operation log list screen 1301, the log data is sorted in an ascending order or a descending order and displayed. When a user pushes a "SEARCH/FILTER" button in the file operation log list screen 1301, only the logs that agree with specific conditions are selected from all the logs and displayed.

Thus, the file operation log list screen 1301 is constituted so that a user can display intelligibly the operation history about the file that the user accessed. The file operation log list screen 1301 is constituted so that a user can analyze a history (log) easily by operating the file operation log list screen 1301.

It should be noted that the histories merged by the network file server 303 according to the processes shown in FIG. 8A, FIG. 8B, FIG. 9A, and FIG. 9B can be saved and managed without deleting, when the history storage area in the image forming apparatus 101 is abundant. In this case, when a user selects the desired log in the file operation log list screen 1301 and pushes a "DETAIL" button, the histories about the selected log that the network file server 303 merged according to the processes in FIG. 8A, FIG. 8B, FIG. 9A, and FIG. 9B are displayed in a time sequence, for example.

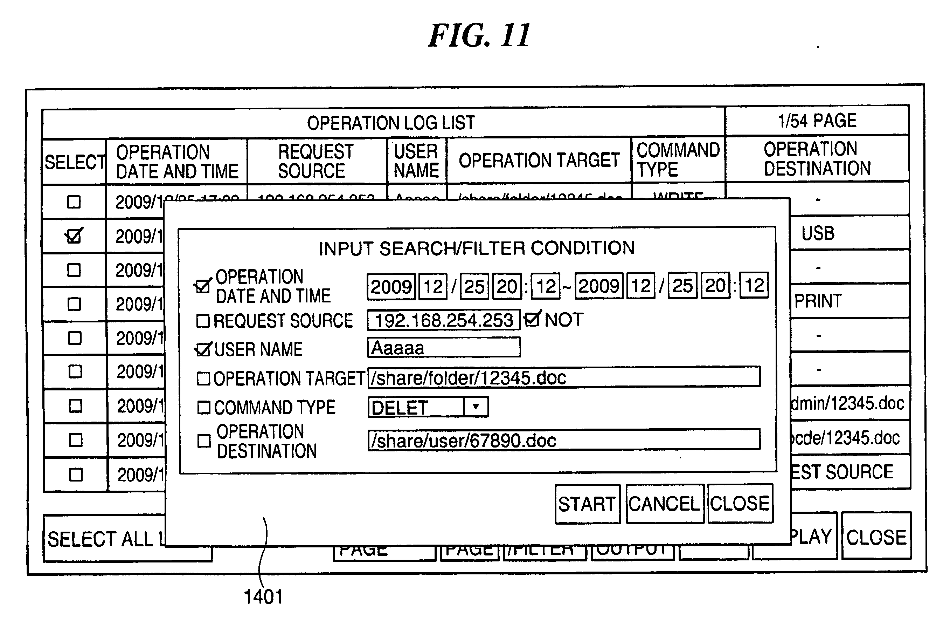

FIG. 11 is an example of a display screen when the "SEARCH/FILTER" button in FIG. 10 is pushed. A search/filter condition input screen 1401 is a pop-up screen displayed in front of the file operation log list screen 1301. When a user sets a search/filter condition and pushes a "START" button on the search/filter condition input screen 1401, the image forming apparatus 101 extracts only the log corresponding to the specific condition from the file operation log, and displays it on the file operation log list screen 1301. In this way, when a new file operation log list screen 1301 is displayed, the search/filter condition input screen 1401 disappears from a screen.

In the search/filter condition input screen 1401, an operation date and time, a request source, a user name, an operation target, a command type, and an operation target can be set as the search/filter conditions. When the search/filter operation is executed by setting a condition of the operation date and time, a user sets the date and time of a log search starting point and a log search end point, and pushes a "START" button. Accordingly, the image forming apparatus 101 displays all the saved logs of the designated term, on the file operation log list screen 1301.

When the search/filter operation is executed by setting a condition of the request source, a user input information of an apparatus such as a name or an IP address of the host on which a file operation was performed, and pushes the "START" button. Accordingly, the image forming apparatus 101 displays all the saved logs corresponding to the request source, on the file operation log list screen 1301. Here, the user can input a part of information about the request source. In this case, the image forming apparatus 101 displays all the saved logs about the request sources that match the inputted part, on the file operation log list screen 1301. When a user checks a select box "NOT" with inputting a request source, the image forming apparatus 101 displays all the saved logs of the request sources except the inputted request source, on the file operation log list screen 1301.

When the search/filter operation is executed by setting the user name, a user authenticates to the image forming apparatus 101, inputs a name of user who performed the file operation, and pushes the "START" button. Accordingly, the image forming apparatus 101 displays all the saved logs corresponding to the inputted user name, on the file operation log list screen 1301. Here, the user can input a part of a user name. In this case, the image forming apparatus 101 displays all the saved logs of which parts of the user names agree with the inputted partial user name, on the file operation log list screen 1301. It should be noted that logs can be searched using unauthorized common user names, such as a guest and a common.

When the search/filter operation is executed by setting a condition of the operation target, a user inputs a path of the operated file, and pushes the "START" button. Accordingly, the image forming apparatus 101 displays all the saved logs that match the inputted file path, on the file operation log list screen 1301. Here, the user can input a part of a file path. In this case, the image forming apparatus 101 displays all the saved logs of which parts the file paths match the inputted partial file path, on the file operation log list screen 1301.

When the search/filter operation is executed by setting a condition of the command type, a user selects and inputs a command type of the operation applied to the operation target file, and pushes the "START" button. Accordingly, the image forming apparatus 101 displays all the saved logs of which the command types match the inputted command type, on the file operation log list screen 1301. A user can not only select a single command type (READ, WRITE, COPY, MOVE, RENAME, and DELETE) but also can select plural command types (READ/WRITE, COPY/MOVE/RENAME, etc.). When a user select plural command types, the image forming apparatus 101 displays all the saved logs of which the command types match any of the selected command types, on the file operation log list screen 1301.

When the search/filter operation is executed by setting a condition of the operation target, a user inputs an operation target file path of copy, movement, renaming or the like, and pushes the "START" button. Accordingly, the image forming apparatus 101 displays all the saved logs of which the operation targets match the inputted operation target file path, on the file operation log list screen 1301. Here, the user can input a part of an operation target file path. In this case, the image forming apparatus 101 displays all the saved logs of which parts the file paths match the inputted partial file path, on the file operation log list screen 1301.

A compound setting is possible for the search/filter condition mentioned above. Therefore, when a user selects a plurality of filter conditions as a retrieval target, the image forming apparatus 101 performs an AND-condition search with a plurality of search/filter conditions, and displays all the saved logs corresponding to the conditions, on the file operation log list screen 1301. Accordingly, a user can search with the compound filter conditions of the request source and the command type after performing a NOT selection by inputting the local as the request source and designating the command type of READ/WRITE, for example. As a result, the image forming apparatus 101 can display a list of logs showing the files that are saved within the image forming apparatus 101 and that were outputted from the image forming apparatus 101. The configuration that can control and display such logs is useful also from the viewpoint of the improvement in security.

A compound setting of the search/filter condition enables to control by dividing the histories into the external copy to outside the image forming apparatus 101 and the internal copy inside the image forming apparatus 101. This enables to analyze the file operation that the user brought outside the image forming apparatus 101 efficiently.

### Other Embodiments

Aspects of the present invention can also be realized by a computer of a system or apparatus (or devices such as a CPU or MPU) that reads out and executes a program recorded on a memory device to perform the functions of the above-described embodiment(s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (e.g., computer-readable medium).

Outside of the scope of the invention as claimed, there is an information processing apparatus (101) having a history control function comprising a file storage unit (205) for storing a file, a communication unit (206) for communicating with an external apparatus (102 or 103) via a network (104), characterized in that the information processing apparatus further comprises an operation request storage unit (205) for storing operation requests to the file stored in said file storage unit (205) from the external apparatus (102 or 103), an analysis unit (303) for analyzing the operation requests stored in said operation request storage unit (205), and an operation log storage unit (303) for determining contents of the operation requests to the file stored in said file storage unit (205) based on an analysis result by said analysis unit (303), and to store the contents as operation logs about the file stored in said file storage unit (205).

Also outside of the scope of the invention as claimed, there is a control method for an information processing apparatus having a history control function comprising storing operation requests to a file stored in a file storage unit (205) from an external apparatus (102 or 103) that can communicate via a network(104), analyzing the operation requests stored, determining contents of the operation requests to the file stored in the file storage unit (205) based on an analysis result, and storing the contents as operation logs about the file stored in the file storage unit (205).

While the present invention has been described with reference to exemplary embodiments, it is to be understood that the invention is not limited to the disclosed exemplary embodiments but defined by the following claims.

## Claims

1. An image forming apparatus (101) having a history control function, comprising:
a file storage unit (205) for storing a file;
a scanning unit (201, 204) for generating image data which can be stored as an image data file in said file storage unit;
a communication unit (206) for communicating with an external apparatus (102, 103) via a network (104) using a predetermined protocol allowing operation requests on files stored in said file storage unit;
a history storage unit (205) for storing (S808, S812, S813) histories of operation requests from the external apparatus (102, 103) to files stored in said file storage unit and comprising a history table (901);
a history acquisition timer; and
a processing unit (201) for analyzing (S815) the stored histories of operation requests, determining contents of the respective operation requests based on the analysis result, and storing (S816) the determined contents as operation logs about files stored in said file storage unit;
wherein reading, writing, or copying a file using said protocol comprises one or more operation requests for reading or writing given amounts of data starting from different respective positions within the file, with the number of operation requests to process the entire file increasing with the size thereof;
**characterized in that**
the history acquisition timer is associated with the history table;
the apparatus is adapted to start (S814) the history acquisition timer with a predefined time interval, triggered by storing a history of an operation request from the external apparatus to files stored in the file storage unit;
the processing unit is adapted to operate (S815, S816) triggered by timeout of the history acquisition timer; and
the processing unit is further adapted to extract, from the history table comprising the stored histories of operation requests from the external apparatus, the stored histories which together correspond to reading one entire file or writing one entire file;
to merge the extracted histories which together correspond to reading one entire file or writing one entire file into one corresponding history out of a read request history (S1214) and a write request history (S1218); and
to store the one corresponding history as operation log (S1211, S1214, S1218, S1227) about the respective file stored in said file storage unit.

2. The image forming apparatus according to claim 1, wherein the type of the operation requests of which histories are stored is any of reading from file, writing to file, copying from file, moving a file, deleting a file, and renaming a file.

3. The image forming apparatus according to claim 1, wherein said history storage unit (205) is adapted to store histories of the operation requests that the external apparatus (102, 103) generates during a fixed term or until receiving a command that shows the end of operation requests from the external apparatus (102, 103).

4. The image forming apparatus according to claim 2, wherein said processing unit is adapted to analyze a history of an operation request based on an offset value of the target file of the operation request, a data size read from the position shown by the offset value, and a data size of the target file when the type of the operation request is reading from file or writing to file.

5. The image forming apparatus according to claim 2, wherein said processing unit is adapted to analyze histories of operation requests based on a time interval between operation requests when the type of the operation request is reading from file or writing to file.

6. The image forming apparatus according to claim 2, wherein said processing unit is adapted to analyze a history of an operation request based on a file path of the target file of the operation request and a file path of an operation destination when the type of the operation request is reading from a file or writing to a file.

7. The image forming apparatus according to claim 1, further comprising a display unit which has a touch-panel function and is configured to display the operation logs stored by said processing unit on a user interface.

8. The image forming apparatus according to any one of claims 1 to 7, having a local print function (204).

9. The image forming apparatus according to any one of claims 1 to 8, which is an embedded system.

10. The image forming apparatus according to any one of claims 1 to 9, wherein the predetermined protocol is Common Internet File System (CIFS).

11. A history control method for an image forming apparatus (101) configured to communicate (206) with an external apparatus (102, 103) via a network (104) using a predetermined protocol allowing operation requests on files stored in a file storage unit (205);
wherein the image forming apparatus comprises a scanning unit (201, 204) for generating image data which can be stored as an image data file in said file storage unit;
the method comprising:
a history storage step of storing (S808, S812, S813) histories of operation requests from the external apparatus (102, 103) to files stored in said file storage unit (205) and comprising a history table (901);
a processing step of analyzing (S815) the stored histories of operation requests, determining contents of the respective operation requests based on the analysis result, and storing (S816) the determined contents as operation logs about files stored in said file storage unit;
wherein reading, writing, or copying a file using said protocol comprises one or more operation requests for reading or writing given amounts of data starting from different respective positions within the file, with the number of operation requests to process the entire file increasing with the size thereof;
**characterized in that**
a history acquisition timer is associated with the history table;
the history storage step starts (S814) the history acquisition timer with a predefined time interval, triggered by storing a history of an operation request from the external apparatus to files stored in the file storage unit;
timeout of the history acquisition timer triggers execution (S815, S816) of the processing step; and
the processing step extracts, from the stored histories of operation requests from the external apparatus, the stored histories which together correspond to reading one entire file or writing one entire file;
merges the extracted histories which together correspond to reading one entire file or writing one entire file into one corresponding history out of a read request history (S1214) and a write request history (S1218); and
stores the one corresponding history as operation log (S1211, S1214, S1218, S1227) about the respective file stored in said file storage unit.

12. The history control method according to claim 11, wherein the image forming apparatus includes a display unit having a touch-panel function, and said display unit is used to display the operation logs stored in said operation log storage unit on a user interface.

13. The history control method according to claim 11 or 12, wherein the image forming apparatus has a local print function (204).

14. The history control method according to any one of claims 11 to 13, wherein the image forming apparatus is an embedded system.

## Patentansprüche

1. Bilderzeugungsvorrichtung (101) mit einer Verlaufssteuerfunktion, umfassend:
eine Dateispeichereinheit (205) zum Speichern einer Datei;
eine Abtasteinheit (201, 204) zum Erzeugen von Bilddaten, die als eine Bilddatendatei in der Dateispeichereinheit gespeichert werden können;
eine Kommunikationseinheit (206) zum Kommunizieren mit einer externen Vorrichtung (102, 103) über ein Netz (104) mittels eines vorbestimmten Protokolls, das Operationsanforderungen an in der Dateispeichereinheit gespeicherte Dateien erlaubt;
eine Verlaufsspeichereinheit (205) zum Speichern (S808, S812, S813) von Verläufen von Operationsanforderungen von der externen Vorrichtung (102, 103) an in der Dateispeichereinheit gespeicherte Dateien und eine Verlaufstabelle (901) umfassend;
einen Verlaufserfassungstimer; und
eine Verarbeitungseinheit (201) zum Analysieren (S815) der gespeicherten Verläufe von Operationsanforderungen, zum Bestimmen von Inhalten der jeweiligen Operationsanforderungen basierend auf dem Analyseresultat, sowie zum Speichern (S81 6) der bestimmten Inhalte als Operationsprotokolle über in der Dateispeichereinheit gespeicherte Dateien;
wobei Lesen, Schreiben oder Kopieren einer Datei mittels des Protokolls eine oder mehr Operationsanforderungen umfasst zum Lesen oder Schreiben gegebener Datenmengen beginnend von verschiedenen jeweiligen Positionen innerhalb der Datei, wobei die Anzahl der Operationsanforderungen zum Verarbeiten der ganzen Datei mit deren Größe zunimmt;
**dadurch gekennzeichnet, dass**
der Verlaufserfassungstimer mit der Verlaufstabelle assoziiert ist;
die Vorrichtung angepasst ist, den Verlaufserfassungstimer mit einem vorbestimmten Zeitintervall zu starten (S814), ausgelöst durch Speichern eines Verlaufs einer Operationsanforderung von der externen Vorrichtung an in der Dateispeichereinheit gespeicherte Dateien;
die Verarbeitungseinheit angepasst ist, ausgelöst durch Time-out des Verlaufserfassungstimers zu operieren (S815, S816); und
die Verarbeitungseinheit weiterhin angepasst ist, aus der Verlaufstabelle, welche die gespeicherten Verläufe von Operationsanforderungen von der externen Vorrichtung umfasst, die gespeicherten Verläufe zu extrahieren, die zusammen Lesen einer ganzen Datei oder Schreiben einer ganzen Datei entsprechen;
die extrahierten Verläufe, die zusammen Lesen einer ganzen Datei oder Schreiben einer ganzen Datei entsprechen, zu vereinigen in einen entsprechenden Verlauf von einem Leseanforderungsverlauf (S1214) und einem Schreibanforderungsverlauf (S1218); und
den einen entsprechenden Verlauf als Operationsprotokoll (S1211, S1214, S1218, S1227) über die jeweilige in der Dateispeichereinheit gespeicherte Datei zu speichern.

2. Bilderzeugungsvorrichtung nach Anspruch 1, bei der der Typ der Operationsanforderungen, von denen Verläufe gespeichert werden, einer ist aus Lesen aus einer Datei, Schreiben in eine Datei, Kopieren aus einer Datei, Verschieben einer Datei, Löschen einer Datei sowie Umbenennen einer Datei.

3. Bilderzeugungsvorrichtung nach Anspruch 1, bei der die Verlaufsspeichereinheit (205) angepasst ist, Verläufe der Operationsanforderungen zu speichern, welche die externe Vorrichtung (102, 103) erzeugt, während eines festen Zeitabschnitts oder bis zum Empfang eines Befehls, welcher das Ende von Operationsanforderungen von der externen Vorrichtung (102, 103) anzeigt.

4. Bilderzeugungsvorrichtung nach Anspruch 2, bei der die Verarbeitungseinheit angepasst ist, einen Verlauf einer Operationsanforderung zu analysieren, basierend auf einem Offsetwert der Zieldatei der Operationsanforderung, einer von der durch den Offsetwert angezeigten Position gelesenen Datengröße sowie einer Datengröße der Zieldatei, wenn der Typ der Operationsanforderung Lesen aus einer Datei oder Schreiben in eine Datei ist.

5. Bilderzeugungsvorrichtung nach Anspruch 2, bei der die Verarbeitungseinheit angepasst ist, Verläufe von Operationsanforderungen basierend auf einem Zeitintervall zwischen Operationsanforderungen zu analysieren, wenn der Typ der Operationsanforderung Lesen aus einer Datei oder Schreiben in eine Datei ist.

6. Bilderzeugungsvorrichtung nach Anspruch 2, bei der die Verarbeitungseinheit angepasst ist, einen Verlauf einer Operationsanforderung basierend auf einem Dateipfad der Zieldatei der Operationsanforderung und einem Dateipfad eines Operationszielortes zu analysieren, wenn der Typ der Operationsanforderung Lesen aus einer Datei oder Schreiben in eine Datei ist.

7. Bilderzeugungsvorrichtung nach Anspruch 1, die weiterhin eine Anzeigeeinheit umfasst, die eine Bildschirmtastfeldfunktion aufweist und konfiguriert ist, um die durch die Verarbeitungseinheit gespeicherten Operationsprotokolle auf einer Benutzeroberfläche anzuzeigen.

8. Bilderzeugungsvorrichtung nach einem der Ansprüche 1 bis 7, die eine lokale Druckfunktion (204) besitzt.

9. Bilderzeugungsvorrichtung nach einem der Ansprüche 1 bis 8, die ein eingebettetes System ist.

10. Bilderzeugungsvorrichtung nach einem der Ansprüche 1 bis 9, bei der das vorbestimmte Protokoll Common Internet File System (CIFS) ist.

11. Verlaufssteuerverfahren für eine Bilderzeugungsvorrichtung (101), die konfiguriert ist, um mit einer externen Vorrichtung (102, 103) über ein Netz (104) mittels eines vorbestimmten Protokolls zu kommunizieren (206), das Operationsanforderungen an in einer Dateispeichereinheit (205) gespeicherte Dateien erlaubt;
wobei die Bilderzeugungsvorrichtung eine Abtasteinheit (201, 204) zum Erzeugen von Bilddaten umfasst, die als eine Bilddatendatei in der Dateispeichereinheit gespeichert werden können;
wobei das Verfahren umfasst:
einen Verlaufsspeicherschritt zum Speichern (S808, S812, S813) von Verläufen von Operationsanforderungen von der externen Vorrichtung (102, 103) an in der Dateispeichereinheit (205) gespeicherte Dateien und eine Verlaufstabelle (901) umfassend;
einen Verarbeitungsschritt zum Analysieren (S815) der gespeicherten Verläufe von Operationsanforderungen, zum Bestimmen von Inhalten der jeweiligen Operationsanforderungen basierend auf dem Analyseresultat sowie zum Speichern (S816) der bestimmten Inhalte als Operationsprotokolle über in der Dateispeichereinheit gespeicherte Dateien;
wobei Lesen, Schreiben oder Kopieren einer Datei mittels des Protokolls eine oder mehr Operationsanforderungen umfasst zum Lesen oder Schreiben gegebener Datenmengen beginnend von verschiedenen jeweiligen Positionen innerhalb der Datei, wobei die Anzahl der Operationsanforderungen zum Verarbeiten der ganzen Datei mit deren Größe zunimmt;
**dadurch gekennzeichnet, dass**
ein Verlaufserfassungstimer mit der Verlaufstabelle assoziiert ist;
der Verlaufsspeicherschritt den Verlaufserfassungstimer mit einem vorbestimmten Zeitintervall startet (S814), ausgelöst durch Speichern eines Verlaufs einer Operationsanforderung von der externen Vorrichtung an in der Dateispeichereinheit gespeicherte Dateien;
Time-out des Verlaufserfassungstimers Ausführen (S81 5, S81 6) des Verarbeitungsschritts auslöst; und
der Verarbeitungsschritt aus den gespeicherten Verläufen von Operationsanforderungen von der externen Vorrichtung die gespeicherten Verläufe extrahiert, die zusammen Lesen einer ganzen Datei oder Schreiben einer ganzen Datei entsprechen;
die extrahierten Verläufe, die zusammen Lesen einer ganzen Datei oder Schreiben einer ganzen Datei entsprechen, in einen entsprechenden Verlauf von einem Leseanforderungsverlauf (S1214) und einem Schreibanforderungsverlauf (S1218) vereinigt; sowie
den einen entsprechenden Verlauf als Operationsprotokoll (S1211, S1214, S1218, S1227) über die jeweilige in der Dateispeichereinheit gespeicherte Datei speichert.

12. Verlaufssteuerverfahren nach Anspruch 11, bei dem die Bilderzeugungsvorrichtung eine Anzeigeeinheit mit einer Bildschirmtastfeldfunktion beinhaltet, und die Anzeigeeinheit genutzt wird, die in der Operationsprotokollspeichereinheit gespeicherten Operationsprotokolle auf einer Benutzeroberfläche anzuzeigen.

13. Verlaufssteuerverfahren nach Anspruch 11 oder 12, bei dem die Bilderzeugungsvorrichtung eine lokale Druckfunktion (204) besitzt.

14. Verlaufssteuerverfahren nach einem der Ansprüche 11 bis 13, bei dem die Bilderzeugungsvorrichtung ein eingebettetes System ist.

## Revendications

1. Appareil (101) de formation d'image ayant une fonction de commande d'historique comprenant :
une unité (205) de stockage de fichiers destinée à stocker un fichier ;
une unité (201, 204) de numérisation destinée à générer des données d'image qui peuvent être stockées en tant que fichier de données d'image dans ladite unité de stockage de fichiers ;
une unité (206) de communication destinée à communiquer avec un appareil externe (102, 103) via un réseau (104) en utilisant un protocole prédéterminé permettant des demandes d'opération sur des fichiers stockés dans ladite unité de stockage de fichiers ;
une unité (205) de stockage d'historiques destinée à stocker (S808, S812, S813) des historiques de demandes d'opération provenant de l'appareil externe (102, 103) pour des fichiers stockés dans ladite unité de stockage de fichiers et comprenant une table (901) d'historiques ;
un temporisateur d'acquisition d'historique ; et
une unité (201) de traitement destiné à analyser (S815) les historiques stockés de demandes d'opération, à déterminer, en se basant sur le résultat d'analyse, des contenus des demandes respectives d'opération, et à stocker (S816) les contenus déterminés en tant que journaux d'opérations au sujet des fichiers stockés dans ladite unité de stockage de fichiers,
dans lequel la lecture, l'écriture ou la copie d'un fichier en utilisant ledit protocole comprend une ou plusieurs demandes d'opération pour lire ou écrire des quantités données de données en commençant à partir de positions respectives différentes à l'intérieur du fichier, le nombre de demandes d'opération pour traiter le fichier en entier augmentant avec la taille de celui-ci,
**caractérisé en ce que** :
le temporisateur d'acquisition d'historique est associé avec la table d'historiques ;
l'appareil est apte à démarrer (S814) le temporisateur d'acquisition d'historique avec un intervalle prédéfini de temps, déclenché par le stockage d'un historique d'une demande d'opération provenant de l'appareil externe pour des fichiers stockés dans l'unité de stockage de fichiers ;
l'unité de traitement est apte à opérer (S815, S816) en étant déclenchée par la fin de temporisation du temporisateur d'acquisition d'historique ; et
l'unité de traitement est en outre apte :
à extraire, de la table d'historiques comprenant les historiques stockés de demandes d'opération provenant de l'appareil externe, les historiques stockés qui correspondent ensemble à la lecture d'un fichier en entier ou à l'écriture d'un fichier en entier ;
à fusionner les historiques extraits qui correspondent ensemble à la lecture d'un fichier en entier ou à l'écriture d'un fichier en entier en un historique correspondant parmi un historique de demandes de lecture (S1214) et un historique de demandes d'écriture (S1218) ; et
à stocker l'historique correspondant en tant que journal d'opérations (S1211, S1214, S1218, S1227) au sujet du fichier respectif stocké dans ladite unité de stockage de fichiers.

2. Appareil de formation d'image selon la revendication 1, dans lequel le type des demandes d'opération dont les historiques sont stockés est l'un quelconque de la lecture à partir d'un fichier, de l'écriture dans un fichier, de la copie d'un fichier, du déplacement d'un fichier, de la suppression d'un fichier et du changement de nom d'un fichier.

3. Appareil de formation d'image selon la revendication 1, dans lequel ladite unité (205) de stockage d'historiques est apte à stocker des historiques des demandes d'opération que l'appareil externe (102, 103) génère durant une période fixée ou jusqu'à la réception d'une instruction qui indique la fin des demandes d'opération provenant de l'appareil externe (102, 103).

4. Appareil de formation d'image selon la revendication 2, dans lequel ladite unité de traitement est apte à analyser un historique d'une demande d'opération en se basant sur une valeur de décalage du fichier cible de la demande d'opération, sur une taille de données lues à partir de la position indiquée par la valeur de décalage, et sur une taille de données du fichier cible lorsque le type de la demande d'opération est la lecture à partir d'un fichier ou l'écriture dans un fichier.

5. Appareil de formation d'image selon la revendication 2, dans lequel ladite unité de traitement est apte à analyser des historiques de demandes d'opération en se basant sur un intervalle de temps entre des demandes d'opération lorsque le type de la demande d'opération est la lecture à partir d'un fichier ou l'écriture dans un fichier.

6. Appareil de formation d'image selon la revendication 2, dans lequel ladite unité de traitement est apte à analyser un historique d'une demande d'opération en se basant sur le chemin d'accès au fichier du fichier cible de la demande d'opération et sur le chemin d'accès au fichier d'une destination d'opération lorsque le type de la demande d'opération est la lecture à partir d'un fichier ou l'écriture dans un fichier.

7. Appareil de formation d'image selon la revendication 1, comprenant en outre une unité d'affichage qui a une fonction d'écran tactile et qui est configurée pour afficher, sur une interface d'utilisateur, les journaux d'opérations stockés par ladite unité de traitement.

8. Appareil de formation d'image selon l'une quelconque des revendications 1 à 7, ayant une fonction d'impression locale (204).

9. Appareil de formation d'image selon l'une quelconque des revendications 1 à 8, qui est un système intégré.

10. Appareil de formation d'image selon l'une quelconque des revendications 1 à 9, dans lequel le protocole prédéterminé est le système commun de fichiers pour Internet (CIFS pour "Common Internet File System").

11. Procédé de commande d'historiques pour un appareil (101) de formation d'image configuré pour communiquer (206) avec un appareil externe (102, 103) via un réseau (104) en utilisant un protocole prédéterminé permettant des demandes d'opération sur des fichiers stockés dans une unité (205) de stockage de fichiers,
dans lequel l'appareil de formation d'image comprend une unité (201, 204) de numérisation destinée à générer des données d'image qui peuvent être stockées en tant que fichier de données d'image dans ladite unité de stockage de fichiers ;
le procédé comprenant :
une étape de stockage d'historiques consistant à stocker (S808, S812, S813) des historiques de demandes d'opération provenant de l'appareil externe (102, 103) pour des fichiers stockés dans ladite unité (205) de stockage de fichiers et comprenant une table (901) d'historiques ;
une étape de traitement consistant à analyser (S815) les historiques stockés de demandes d'opération, à déterminer, en se basant sur le résultat d'analyse, des contenus des demandes respectives d'opération, et à stocker (S816) les contenus déterminés en tant que journaux d'opérations au sujet des fichiers stockés dans ladite unité de stockage de fichiers,
dans lequel la lecture, l'écriture ou la copie d'un fichier en utilisant ledit protocole comprend une ou plusieurs demandes d'opération pour lire ou écrire des quantités données de données en commençant à partir de positions respectives différentes à l'intérieur du fichier, le nombre de demandes d'opération pour traiter le fichier en entier augmentant avec la taille de celui-ci,
**caractérisé en ce que** :
un temporisateur d'acquisition d'historique est associé avec la table d'historiques ;
l'étape de stockage d'historiques démarre (S814) le temporisateur d'acquisition d'historique avec un intervalle prédéfini de temps, déclenché par le stockage d'un historique d'une demande d'opération provenant de l'appareil externe pour des fichiers stockés dans l'unité de stockage de fichiers ;
la fin de temporisation du temporisateur d'acquisition d'historique déclenche l'exécution (S815, S816) de l'étape de traitement ; et
l'étape de traitement :
extrait, des historiques stockés de demandes d'opération provenant de l'appareil externe, les historiques stockés qui correspondent ensemble à la lecture d'un fichier en entier ou à l'écriture d'un fichier en.entier ;
fusionne les historiques extraits qui correspondent ensemble à la lecture d'un fichier en entier ou à l'écriture d'un fichier en entier en un historique correspondant parmi un historique de demandes de lecture (S1214) et un historique de demandes d'écriture (S1218) ; et
stocke l'historique correspondant en tant que journal d'opérations (S1211, S1214, S1218, S1227) au sujet du fichier respectif stocké dans ladite unité de stockage de fichiers.

12. Procédé de commande d'historiques selon la revendication 11, dans lequel l'appareil de formation d'image inclut une unité d'affichage ayant une fonction d'écran tactile, et ladite unité d'affichage est utilisée pour afficher, sur une interface d'utilisateur, les journaux d'opérations stockés dans ladite unité de stockage de journaux d'opérations.

13. Procédé de commande d'historiques selon l'une quelconque des revendications 11 et 12, dans lequel l'appareil de formation d'image a une fonction d'impression locale (204).

14. Procédé de commande d'historiques selon l'une quelconque des revendications 11 à 13, dans lequel l'appareil de formation d'image est un système intégré.
